# EUROPEAN PATENT SPECIFICATION

(11) **EP 1 301 015 B1**
(45) Date of publication and mention of the grant of the patent: **04.01.2006**
(21) Application number: 02022226.1
(22) Date of filing: 02.10.2002
(51) Int. Cl.: H04M 1/60, G10L 15/26, B60N 2/00

(54) **Hands-Free device for mobile communication in a vehicle**
Freisprecheinrichtung zur mobilen Kommunikation im Fahrzeug
Unité mains libre pour le communication mobile dans un véhicule

(30) Priority: 05.10.2001 JP 2001309590
(43) Date of publication of application: 09.04.2003
(73) Proprietor: MATSUSHITA ELECTRIC INDUSTRIAL CO., LTD., Kadoma-shi, Osaka 571-8501 (JP)
(72) Inventor: Kindo, Tsuyoshi, Sennan-gun, Osaka 590-0422 (JP); Tomoda, Masaaki, Suita-shi, Osaka 564-0052 (JP); Kurosaki, Toshihiko, Kobe-shi, Hyogo 657-0023 (JP)
(74) Representative: Balsters, Robert

(56) References cited:
- WO-A-97/27697
- DE-A- 4 300 848
- US-A- 6 108 567
- US-A- 6 141 432

## Description

### BACKGROUND OF THE INVENTION

### (1) Field of the Invention

The present invention relates to a hands-free device that makes a hands-free telephone conversation in a car, and especially to a hands-free device that outputs voice of the other party of a telephone conversation from speakers provided in a car.

### (2) Description of the Prior Art

Conventionally, a hands-free system that makes a telephone conversation without a driver having a cellular phone in his/her hand (hereafter, a hands-free telephone conversation is used in this sense) is proposed (the Japanese Laid-Open Patent Application No. H5-130010).

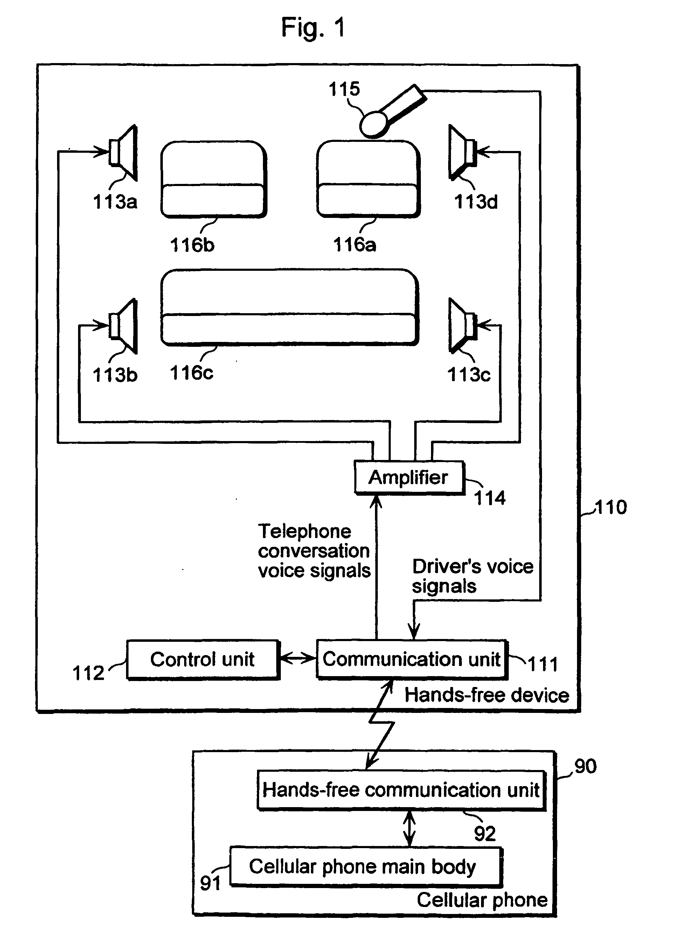

Fig. 1 is a diagram that shows a structure of a conventional hands-free system.

The conventional hands-free system shown in Fig. 1 comprises, for example, a driver's cellular phone 90, which the driver brings into a car, and a hands-free device 110 that is installed in the car, communicates with and controls the cellular phone 90, outputs a voice of the other party of a telephone conversation, and transmits the driver's voice to the other party of the telephone conversation.

The hands-free device 110 comprises a communication unit 111 that communicates with the cellular phone 90, a control unit 112 that controls the communication unit 111, a microphone 115 that captures a driver's voice and outputs driver's voice signals indicating the voice, a speaker 113d that is set up near the driver's seat 116a, a speaker 113a that is set up near a front passenger's seat 116b, two speakers 113b and 113c that are set up near a back seat 116c, and an amplifier 114 that inputs telephone conversation voice signals indicating the other party's voice of a telephone conversation outputted from the communication unit 111, amplifies the telephone conversation voice signals and outputs them to four speakers 113a~113d.

The cellular phone 90 comprises a cellular pone main body 91 that can communicate with another telephone and enables the driver to converse by the telephone, and a hands-free communication unit 92 that communicates with the communication unit 111 of the hands-free device 110, controlled by the cellular phone main body 91.

This hands-free communication unit 92 of the cellular phone 90 is connected with the communication unit 111 of the hands-free device 110 through wireless.

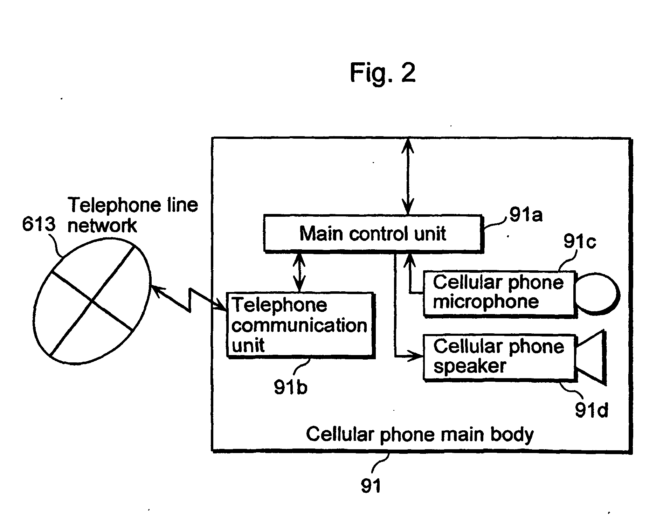

Fig. 2 is a block diagram that shows the functions of the above-mentioned cellular phone main body 91 of the cellular phone 90.

The cellular phone main body 91 comprises, as Fig. 2 shows, a telephone communication unit 91b that communicates with another telephone through a telephone line network 613, a cellular phone microphone 91c, a cellular phone speaker 91d, and main control unit 91a that controls the cellular phone microphone 91c, the cellular phone speaker 91d, and the telephone communication unit 91b.

When this cellular phone 90 is not connected with the hands-free device 110, it enables the user of cellular phone 90 to communicate by telephone with the user of another telephone by using the cellular phone speaker 91d and the cellular phone microphone 91c that are equipped with the cellular phone main body 91.

In other words, the main control unit 91a has the cellular phone microphone 91c capture the user's voice of the cellular phone 90, and has the telephone communication unit 91b transmit signals indicating the voice to another telephone through the telephone line network 613. Then, when the telephone communication unit 91b receives the telephone conversation voice signals indicating the other party's voice of the telephone conversation who uses the other telephone, the main control unit 91a transmits the telephone conversation voice signals to the cellular phone speaker 91d, and has the cellular phone speaker 91d output the other party's voice of telephone conversation.

When a driver brings the cellular phone into a car and connects the cellular phone 90 with the hands-free device 110, the above-mentioned hands-free system comprising the hands-free device 110 and the cellular phone 90, has the microphone 115 of the hands-free device 110 capture the driver's voice, has the speaker 113a~113d output the other party's voice of the telephone conversation, without the cellular phone microphone 91c and the cellular phone speaker 91d performing the above-mentioned operations, and enables the driver to make a hands-free telephone conversation.

To be more specific, when the telephone communication unit 91b of the cellular phone main body 91 is called by the other telephone through the telephone line network 613, and outputs incoming call signals indicating an incoming call to the main control unit 91a, which has the hands-free communication unit 92 transmit the incoming call signals to the communication unit 111 of the hands-free device 110.

When the control unit 112 of the hands-free device 110 realizes that the communication unit 111 has received the incoming call signals, and inputs from the outside an answering instruction signal that instructs to answer the incoming call, it has the communication unit 111 transmit the answering instruction signal to the hands-free communication unit 92 of the cellular phone 90.

When the main control unit 91a of the cellular phone main body 91 realizes that the hands-free communication unit 92 has received the answering instruction signal, it controls the telephone communication unit 91b so that the telephone communication unit 91b can receive the telephone conversation voice signals transmitted by the other telephone.

Then, the main control unit 91a has the hands-free communication unit 92 transmit the telephone conversation voice signals received by the telephone communication 91b to the communication unit 111 of the hands-free device 110. The control unit 112 of the hands-free device 110 has the communication unit 111 transmit the telephone conversation voice signals to the amplifier 114. As a result, the four speakers 113a~113d in the car output the other party's voice of the telephone conversation.

Furthermore, when the control unit 112 of the hands-free device 110 realizes that the communication unit 111 has received the incoming call signals and inputs from the outside the answering instruction signal that instructs to answer the incoming call, the control unit 112 has the communication unit 111 transmit the driver's voice signals outputted from the microphone 115 to the hands-free communication unit 92 of the cellular phone 90. The cellular phone main body 91 90 transmits the driver's voice signals received by the hands-free communication unit 92 to the other telephone through the telephone line network 613.

Thus, under the hands-free device110 of the conventional hands-free system, the microphone 115 captures the driver's voice, the cellular phone 90 transmits the driver's voice signals indicating the voice to the other telephone, and at the same time, based on the telephone conversation signals received by the cellular phone 90, the speakers 113a~113d output the other party's voice of the telephone conversation, and the driver can make a hands-free conversation.

However, under the above-mentioned hands-free device 110 of the conventional hands-free system, because the other party's voice of telephone conversation propagates within the whole body of the car and therefore a fellow passenger hears the voice of the telephone conversation when there is a fellow passenger, there is a problem that the privacy of the driver and the other party of the telephone conversation cannot be protected.

Additionally, in order that only the driver hears the voice of telephone conversation, for example, a hands-free device under which a speaker with directional characteristic to the output direction is set up near the driver's seat with the output direction aimed at the driver is proposed (Japanese Laid-Open Patent Application No. H5-92741). However, in this case, in contrast to the above description, because the voice of the telephone conversation does not propagate within the whole body of the car, the sound quality of the voice of the telephone conversation is poor. When there is a fellow passenger, it cannot be helped from the view point of protecting the privacy, but there are the needs that the driver wants to hear the voice of the telephone conversation of high quality when there is no fellow passenger.

Another hands-free device is known from the document WO97/27697 which describes a portable cellphone (200), with or without its docking system (150') that is integrated as an accessory to a host system such as by providing a terminal interface (terminal mode) to the host for the purpose of user interface and control of the host (300"). The host is coupled to auxiliary sensors (360) by line (365) to provide sensory input to, and output from, the host depending on the designed applications of the host (300"). The portable also provides radio frequency (RF) communication capability which is integrated and controlled by the application running on the host. While functioning in a terminal mode of operation, the portable generates and communicates to the host, through the reverse data line (306), data representing manipulation of the portable keypad. Likewise, the portable relinquishes control of the portable display to the host according to display control commands received by the portable from the host on the forward data line.

### SUMMARY OF THE INVENTION

In view of the foregoing, it is the object of this invention to provide a hands-free device that prevent a fellow passenger from hearing the telephone conversation voice of the other party of the telephone conversation when there is a fellow passenger, to realize the protection of privacy and the preservation of secret, and to make it easy for a driver to hear the telephone conversation voice in good sound quality when there is no fellow passenger.

To achieve the above-mentioned object, the hands-free device according to the present invention is a hands-free device for a driver to make a hands-free telephone conversation using a cellular phone in a car comprising: a first speaker to output sound to the driver; a second speaker to output sound widely in the car;
a detection unit operable to output a detection signal indicating whether there is a fellow passenger or not; and a control unit operable to communicate with the cellular phone, judge whether there is a fellow passenger or not based on the detection signal outputted from the detection unit, upon receiving a telephone conversation voice signal indicating the telephone conversation voice of the other party of the telephone conversation, have mainly the second speaker output the telephone conversation voice when the control unit judges that there is no fellow passenger, and have mainly the first speaker output the telephone conversation voice when the control unit judges that there is a fellow passenger.

By doing this, when there is a fellow passenger, since the telephone conversation voice is outputted mainly from the first speaker that outputs the sound to the driver, It is possible to prevent the fellow passenger from hearing the telephone conversation voice of the other party and to realize the protection of privacy and the preservation of secret. Furthermore, when there is no fellow passenger, since the telephone conversation voice is outputted mainly from a second speaker that outputs sound widely in the car, the driver can hear the telephone conversation voice of the other party of the telephone conversation in good sound quality.

Additionally, it is acceptable that the control unit further has the second speaker output the audio sound when the control unit receives an audio signal indicating the audio sound including at least one of music, radio sound, and TV sound in the case that the telephone conversation voice signals are not received from the cellular phone.

By doing this, in the case that audio apparatus is mounted in the car and the audio apparatus outputs audio signals, since the audio sound is outputted from the second speaker that outputs sound widely in the car, the driver and the fellow passenger can hear the audio sound in good sound quality.

Additionally, it is acceptable that the hands-free device comprises the plural second speakers, wherein the control unit prohibits the second speaker that is nearest to the driver's seat among the plural second speakers from outputting the audio sound and has the other second speaker output the audio sound when the audio signal is outputted in the car in the case that the control unit receives the telephone conversation voice signals.

By doing this, when the driver makes a hands-free telephone conversation while the audio signals are outputted from the audio apparatus mounted in the car, even if the telephone conversation voice of the other party of the telephone conversation outputted mainly from the first speaker flows into the front passenger seat, since the audio signals are outputted by the second speakers other than the second speaker that is nearest to the driver's seat, the telephone conversation voice that flows into the front passenger seat is masked by the audio sounds outputted from the other second speakers, so it is possible not only to prevent the fellow passenger from hearing the telephone conversation but also to reduce the uncomfortable feeling of the fellow passenger by letting the fellow passenger hear the audio sound. Furthermore, since the audio sound output from the second speaker that is nearest to the driver's seat is prohibited, it is possible for the driver to hear the telephone conversation voice outputted mainly by the first speaker without being interfered by the audio sound.

Here, it is acceptable that the hands-free device according to the present invention is a hands-free device for a driver to make a hands-free telephone conversation using a cellular phone in a car comprising: a speaker that outputs sounds widely in a car; a display unit operable to display a letter on a display surface aimed at the driver in response to an inputted signal; a detection unit operable to output a detection signal indicating whether there is a fellow passenger in the car or not; and
a control unit operable to communicate with the cellular phone, judge whether there is the fellow passenger or not based on the detection signal outputted from the detection unit, upon receiving telephone conversation voice signals indicating the telephone conversation voice of the other party of the telephone conversation, output the telephone conversation voice from the speaker when the control unit judges that there is no fellow passenger, and output the telephone conversation voice signals to the display unit, which displays the telephone conversation voice in letters when the control unit judges that there is the fellow passenger.

By doing this, when there is a fellow passenger, since the contents of the telephone conversation voice of the other party of the telephone conversation are displayed on a display surface aimed at the driver in letter, it is possible to realize the protection of privacy and the preservation of secret. Furthermore, when there is no fellow passenger, since the telephone conversation voice is outputted mainly from a second speaker to output sound widely in the car, the driver can hear the telephone conversation voice of the other party of the telephone conversation in good sound quality.

Additionally, it is acceptable that the hands-free device further comprises, a microphone that captures a voice of the driver and outputs voice signals indicating the voice, wherein the control unit transmits the voice signals to the cellular phone when the control unit receives the voice signals from the microphone and, at the same time, erases past letters indicating contents of telephone conversation voice of the other party of the telephone conversation displayed on the display unit.

By doing this, when the driver utters a voice in a hands-free telephone conversation, since the past letters indicating the contents of the telephone conversation voice of the other party of the telephone conversation displayed on the display unit are deleted, the driver can see easily the latest letters.

Furthermore, the present invention can be realized as an output method of the telephone conversation contents, and a program executed by a computer.

### BRIEF DESCRIPTION OF THE DRAWINGS

These and other objects, advantages and features of the invention will become apparent from the following description thereof taken in conjunction with the accompanying drawings which illustrate a specific embodiment of the invention. In the Drawings:
Fig. 1 is a diagram that shows a structure of a conventional example of a hands-free system.
Fig. 2 is a block diagram that shows the functions of the cellular phone main body.
Fig. 3 is a diagram that shows an outline structure of a hands-free system according to the first embodiment of the present invention.
Fig. 4 is a diagram that shows a structure of the hands-free system:
Fig. 5 is a flow chart that shows the operations of the hands-free system.
Fig. 6A is an explanatory diagram that explains the output situation of the speakers of the hands-free system when there is no fellow passenger, and Fig. 6B is an explanatory diagram that explains the output situation of the speakers of the hands-free system when there is a fellow passenger.
Fig. 7 is a block diagram that shows the functions of a variant of a voice recognition device.
Fig. 8 is a flow chart that shows operations of the voice recognition device when the voice recognition device is used.
Fig. 9 is a diagram that shows a structure of another variant of the hands-free device.
Fig. 10 is a flow diagram that shows operations of the other variant of the hands-free device.
Fig. 11 is a diagram that shows a structure of a hands-free device according to the second embodiment of the present invention.
Fig. 12 is a flow diagram that shows operations of the hands-free device.
Fig. 13A is an explanatory diagram that explains the output situation of the speakers of the hands-free system when there is no fellow passenger, and Fig. 13B is an explanatory diagram that explains the output situation of the speakers of the hands-free system when there is a fellow passenger.
Fig. 14 is a diagram that shows an outline structure of a hands-free system according to the third embodiment of the present invention.
Fig. 15 is a diagram that shows a structure of the hands-free system.
Fig. 16 is a screen display diagram that shows an example of a screen displayed on a display unit of the hands-free system.

### DESCRIPTION OF THE PREFERRED EMBODIMENT(S)

### (The first embodiment)

Hereinafter, a hands-free system according to the first embodiment of the present invention will be explained with reference to the figures.

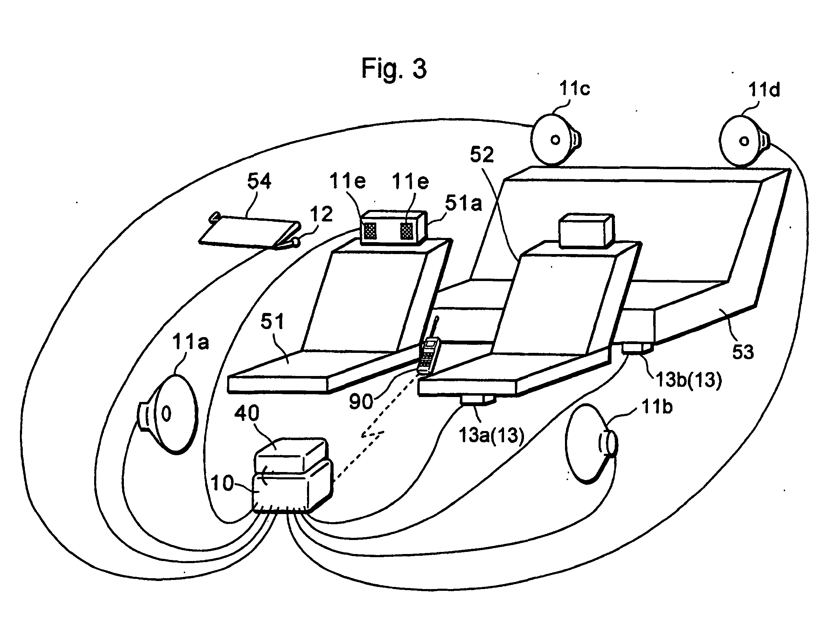

Fig. 3 is a diagram that shows an outline structure of a hands-free system according to the first embodiment of the present Invention.

This hands-free system detects whether there is a fellow passenger In the car or not, switches the speakers that output the other party's voice of the telephone conversation according to the detection result, and comprises two front speakers (the second speakers) 11a and 11b installed at the front of a car, two rear speakers (the second speakers) 11c and 11d installed at the rear of the car, two driver's speakers (the first speakers) 11e buried in the front part of the headrest 51a of the driver's seat 51, a microphone 12 that captures the driver's voice, a cellular phone that the driver brings into the car, a detection unit 13 that outputs the detection signal according to whether there is a fellow passenger in the car or not, and a control equipment 10 that communicates with the cellular phone 90 and controls the microphone 12 and the six speakers 11a~11e based on the communication status with the cellular phone 90 and the detection signal of the detection unit 13.

The front speaker 11a is, for example, embedded in the door at the side of the driver's seat 51, and the front speaker 11b is embedded in the door at the side of the front passenger seat 52. In other words, the front speaker 11a is located near the driver's seat 51, and the front speaker 11b is located near the front passenger seat 52.

The rear speakers 11c and 11d are, for example, are installed at the both of the right and the left ends respectively of the upper part of the back seat 53.

These front speakers 11a, 11b and rear speakers 11c, 11d do not have the directional characteristic for the each output direction. When all speakers 11a~11d output a sound, the sound propagates within the whole body of the car.

The driver's speakers 11e each have the directional characteristic for the output direction and are buried in the headrest 51a so that each output direction faces to each driver's ear when the driver sits on the driver's seat 51a. Additionally, these driver's speakers 11e are composed so that the output characteristics becomes almost flat at the frequency from 300Hz to 3.4 kHz in order that the voice is outputted for a person to hear clearly.

The microphone 12 has the directional characteristic to capture the voice from the specified directions, is attached to the sun visor 54 that is in front of the driver's seat 51 with the directional characteristic faced to the driver.

The detection unit 13 comprises two pressure sensors 13a and 13b, which output the detection signal according to the pressure received, the pressure sensor 13a is placed under the front passenger's seat, and the pressure sensor 13b is placed under the back seat 53. When a fellow passenger sits on the front passenger's seat, the pressure sensor 13a receives pressure by the weight of the fellow passenger, and outputs the detection signal according to the pressure to the control equipment 10. Similarly, when the fellow passenger sits on the back seat 53, the pressure sensor 13b receives pressure by the weight of the fellow passenger, and outputs the detection signal according to the pressure to the control equipment 10.

Additionally, the cellular phone 90, like the cellular phone explained in the conventional example, comprises the hands-free communication unit 92 and the cellular phone main body 91, and the cellular phone main body 91 comprises the main control unit 91a, the telephone communication unit 91b, the cellular phone microphone 91c, and the cellular phone speaker 91d as Fig. 1 and Fig. 2 indicate.

The control equipment 10 is integrated into a front panel, a console box and so forth, and has an operation input unit such as operation buttons and so forth. Incidentally, into this control equipment 10, a car navigation device may be integrated.

Additionally, In the car, an audio unit 40 that outputs audio signals indicating audio sounds by reading musical data from such a musical recording medium as CD (Compact Disc) and MD (Mini Disc), and receiving electric waves from a TV and a radio, is integrated, like the control equipment 10, into the front panel, the console box and so forth. Here, the audio sound is at least one of music based on the musical data and the TV sound and the radio sound based on the received electric waves.

Then, the control equipment 10, which is connected with the audio unit 40 electrically, inputs the audio signals outputted by the audio unit 40, and based on the audio signals, outputs the audio sounds from some or all of the front speakers 11a, 11b and the rear speakers 11c, 11d.

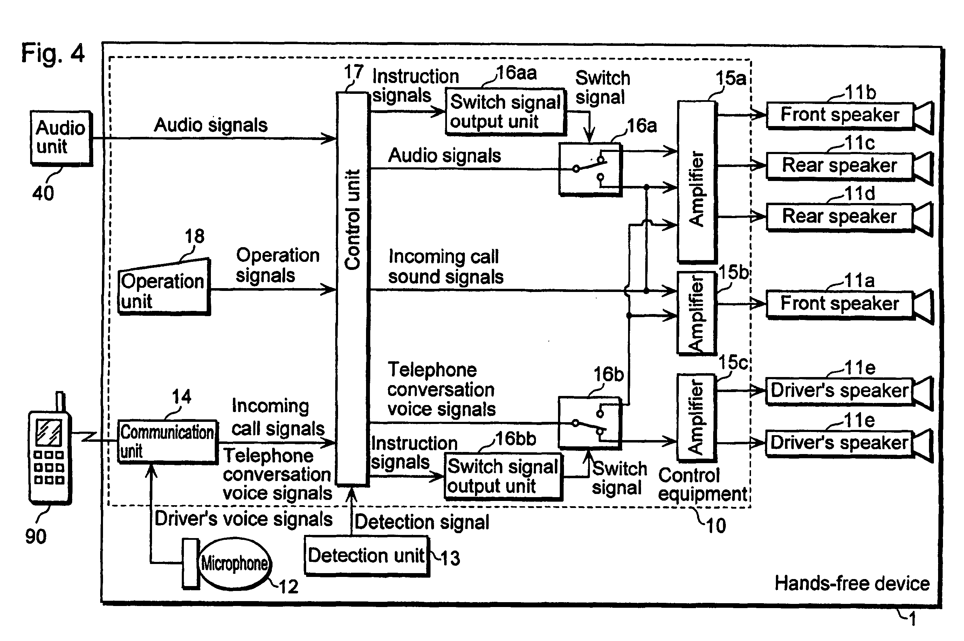

Fig. 4 is a diagram that shows an structure of a hands-free system 1 according to the present embodiment.

According to the present embodiment, the hands-free system 1 comprises the front speakers 11a, 11b, rear speakers 11c, 11d, the driver's speakers 11e, the microphone 12, the detection unit 13, and the control equipment 10.

The control equipment 10 comprises a communication unit 14 that is a communication interface with the cellular phone 90, an amplifier 15a that amplifies the inputted signals and outputs to the front speaker 11b, the rear speakers 11c and 11d, an amplifier 15b that amplifies the inputted signals and outputs them to the front speaker 11a, the amplifier 15c that amplifies the inputted signals and outputs them to the two driver's speakers 11e, selector switches 16a and 16b that output the inputted signals to the selected place to be outputted, switch signal output units 16aa and 16bb that outputs a switch signal to instruct the selector switches 16a and 16b respectively to switch the selected place to be outputted, an operation unit 18 that is equipped with the above-mentioned operation buttons and outputs the operation signals according to operations of the operation buttons, and a control unit 17 that controls the switch signal output units 16aa and 16bb according to the operation signals, the detection signal from the detection unit 13, and an output situation of the audio signals from the audio unit 40.

A communication unit 14 communicates with the hands-free communication unit 92 of the cellular phone 90 through a wireless medium. The communication is done, for example, conforming to the communication standards of Bluetooth (a registered trademark of The Bluetooth SIG Incorporated).

In other words, the cellular phone 90 is compatible with Bluetooth ®. When the cellular phone 90 is brought into the car and comes into the wireless communication area of the communication unit 14, the communication unit 14 establishes a communication link with the cellular phone 90.

To be more specific, the control unit 17 of the control equipment 10 not only communicates conforming to the communication standards of Bluetooth ®, but also has the communication unit 14 broadcast an inquiry command that inquires whether the device has the functions as a cellular phone, according to the operations of the operation buttons of the operation unit 18 by a user (driver). Then the control unit 17 waits for the communication unit 14 to receive a response message that it is the device that not only communicates conforming to the communication standards of Bluetooth® but also has the functions as a cellular phone. Consequently, when the cellular phone 90 comes into the communication area of the communication unit 14, the hands-free communication unit 92 of the cellular phone 90 receives the above-mentioned inquiry command, the main control unit 91a of the cellular phone 90 detects the reception, and the main control unit 91a has the hands-free communication 92 transmit the response message to the inquiry command to the communication unit 14 of the control equipment 10. As a result, the control unit 17 of the control equipment 10 detects that the response message has been received by the communication unit 14, receives an operation signal that instructs to connect the communication unit 14 of the control equipment 10 and the hands-free communication unit 92 of the cellular phone 90, and establishes the communication link between the communication 14 of the control equipment 10 and the hands-free communication unit 92 of the cellular phone 90.

Then, when the cellular phone is called by another telephone through the telephone line network 613, in other words, the cellular phone 90 receives an incoming call, as was stated when the conventional example was mentioned, since the hands-free communication unit 92 of the cellular phone 90 transmits the incoming call signals, the communication unit 14 of the hands-free device 1 receives the incoming call signals and outputs the signals to the control unit 17.

Furthermore, when the driver operates a hook button that will be explained later and the status of a cellular phone 90 that receives an incoming call becomes off hook, the communication unit 14 receives from the cellular phone 90 the telephone conversation voice signals indicating the telephone conversation voice of the other party of the telephone conversation, who uses the above-mentioned other telephone, and outputs the telephone conversation voice signals to the control unit 17, and transmits the driver's voice signals indicating the driver's voice captured by the microphone 12 to the cellular phone 90.

The operation unit 18 is equipped with the plural operation buttons as was stated above. To be more specific, it is equipped with such operation buttons as an input button that inputs the telephone number of the telephone used by the other party of the telephone conversation, a transmission button to urge the cellular phone 90 to transmit to the telephone whose numbers are inputted, and a hook button that instruct the cellular phone 90 to change an on hook status to an off hook status and vise versa. When these operation buttons are operated, the operation unit 18 outputs the operation signals in response to the operations of the operation buttons to the control unit 17, which control the cellular phone 90 and so forth based on the operation signals through the communication unit 14.

The selector switch 16a inputs the audio signals outputted from the audio unit 40 through the control unit 17 as the input signals and switches the selected place(s) to be outputted from the amplifier 15a to the two amplifiers 15a and 15b and vice versa.

The selector switch 16b inputs the telephone conversation voice signals outputted from the communication unit 14 through the control unit 17 as the input signals and switches the selected place(s) to be outputted from the amplifier 15c to the two amplifiers 15a and 15b and vice versa.

When the control unit 17 inputs the incoming call signals from the communication unit 14, the control unit 17 outputs the incoming call sound signals indicating the incoming call to the two speakers 15a and 15b. Additionally, when the control unit 17 inputs the telephone conversation voice signals from the communication unit 14, the control unit 17 outputs the telephone conversation voice signals to the selector switch 16b, and also switches the selected place to which the signal of the selector switch 16b is outputted to the switch signal output unit 16bb in response to the detection signal from the detection unit 13. As a result, the telephone conversation voice is outputted from the front speakers 11a and 11b and the rear speakers 11c and 11d or from the two driver's speakers 11e.

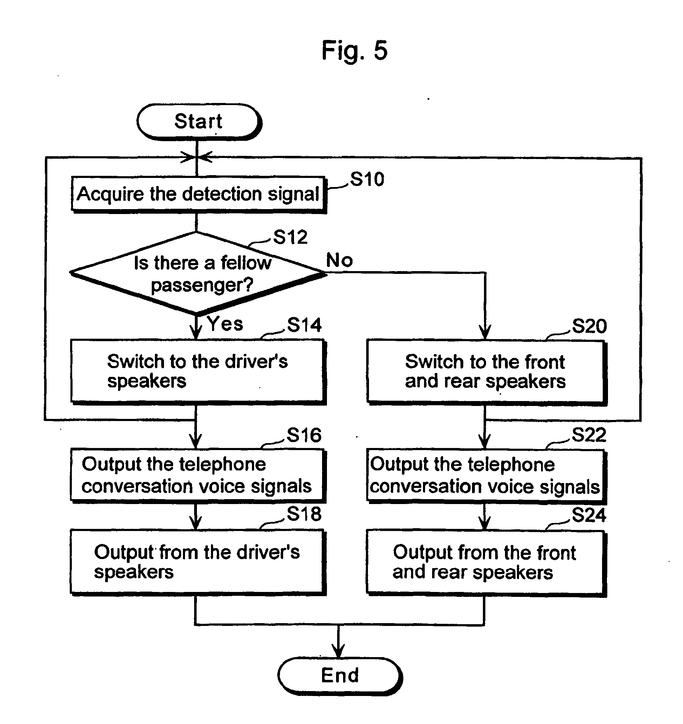

Fig. 5 is a flow chart that shows the operations of the hands-free system according to the present embodiment.

For a start, the control unit 17 acquires each detection signal from the pressure sensors 13a and 13b of the detection unit 13 (Step S10). Here, when the control unit 17 realizes that the voltage reading of at least one of the detection signal exceeds the specified value, the control unit 17 judges that there is a fellow passenger on the front passenger seat 52 or the back seat 53 (Yes at Step S12), and outputs to the switch signal output unit 16bb an instruction signal to make the amplifier 15c the selected place to which the signal of the switch unit 16b are outputted. By doing this, the switch signal output unit 16bb outputs the switch signal based on the above-mentioned instruction signal, and switches the selected place to which the signal of the switch unit 16bb is outputted to the amplifier 15c, in other words, the driver's speakers 11e (Step S14).

As a result, when the control unit 17 inputs the telephone conversation voice signals from the communication unit 14, the control unit 17 outputs this telephone conversation voice signals to the selector switch 16b (Step S16), the driver's speakers 11e, which are buried in the headrest 51a of the driver's seat 51, outputs the telephone conversation voice of the other party of the telephone conversation (Step S18).

Additionally, when the control unit 17 acquires the detection signal from each of the pressure sensors 13a and 13b of the detection unit 13 (Step S10), and realizes that the voltage readings of the two detection signals do not reach the specified value, the control unit 17 judges that there is no fellow passenger on the front passenger seat52 and the back seat 53 (No at Step S12), and outputs to the switch signal output unit 16bb an instruction signal to make the two amplifier 15a and 15b the selected places to which the signal of the switch unit 16b are outputted. By doing this, the switch signal output unit 16bb outputs the switch signal based on the above-mentioned instruction signal, and switches the selected places to which the signal of the switch unit 16bb is outputted to the amplifier 15a and 15b, in other words, the front speakers 11a and 11b and the rear speakers 11c and 11d (Step S20).

As a result, when the control unit 17 inputs the telephone conversation voice signals from the communication unit 14, the control unit 17 outputs this telephone conversation voice signals to the selector switch 16b (Step S22), the front speakers 11a and 11b, and the rear speakers 11c and 11d which are installed in the front and the rear of the car, outputs the telephone conversation voice of the other party of the telephone conversation (Step S24).

As was stated above, according to the present embodiments, the control unit 17 controls the switch signal output unit 16bb and the selector switch 16b, when there is no fellow passenger, the telephone conversation voice from the other party of the telephone conversation are outputted from the front speakers 11a and 11b and the rear speakers 11c and 11d, and propagate within the whole body of the car, and the driver can hear the telephone conversation voice with good sound quality. Additionally, when there is a fellow passenger, the telephone conversation voice from the other party of the telephone conversation is outputted from the two driver's speakers 11e, which are near the driver's ears, it is possible to prevent the fellow passenger from hearing the telephone conversation voice and to protect the privacy. Additionally, because the driver's speakers 11e each have the directional characteristic for the output direction, it is possible to prevent the phenomenon that the sound outputted by the driver's speakers 11e is captured by the microphone 12 and the voice of the driver himself is heard from the telephone of the other party of the telephone conversation like an echo from happening. As a result, there is no need to include a device that prevents the phenomenon from happening, for example, so called echo canceler, in the hands-free system, therefore it is possible to simplify the system composition and reduce the cost.

Furthermore, when the cellular phone 90 receives an incoming call, the incoming call sounds are outputted from the front speakers 11a and 11b and the rear speaker 11c and 11d, and propagate within the whole body of the car, therefore when there is a fellow passenger, not only the driver but also the fellow passenger can hear the incoming call sounds clearly. As a result, it is possible to inform the fellow passenger that there is an incoming call and the driver may begin a hands-free telephone conversation.

Here, the operations of the control unit 17 when the audio unit 40 outputs audio signals are explained.

When the communication unit 14 does not output the telephone conversation voice signals and the Incoming call signals, the control unit 17, regardless of the detection signal from the detection unit 13, outputs to the switch signal output unit 16aa an instruction signal to instruct that the selected places to which the signal from the selector switch 16a is outputted should be the two amplifiers 15a and 15b. By doing this, the switch signal output unit 16aa outputs the switch signal based on the above-mentioned instruction signal, and switches the selected places to which the signal of the selector switch 16a is outputted to the two amplifiers 15a and 15b.

As a result, when the control unit 17 inputs audio signals from the audio unit 40, the control unit 17 outputs these audio signals to the selector switch 16a, therefore the audio sounds based on the audio signals are outputted from the front speakers 11a and 11b and the rear speakers 11c and 11d.

Additionally, when the communication unit 14 outputs the incoming call signals while the audio unit 40 outputs the audio signals, the control unit 17 stops outputting the audio signals to the selector switch 16a. By doing this, the output from the front speaker 11a and 11b and the rear speakers 11c and 11d stop and the incoming call sounds are outputted.

On the other hand, as a result that the hook button of the operation unit 18 is operated, when the status of the cellular phone becomes off hook and the communication unit 14 outputs the telephone conversation voice signals, the control unit 17 acts differently in response to the detection signal.

Namely, when the voltage readings of the detection signals from the both pressure sensors 13a and 13b are below the specified value, the control unit 17 stops outputting the audio signals to the selector switch 16a. By doing this, the output of the audio sounds from the front speakers 11a and 11b and the rear speakers 11c and 11d stops, and only the telephone conversation voice of the other party of the telephone conversation is outputted from the front speakers 11a and 11b and the rear speakers 11c and 11d.

Then, when the voltage reading of the detection signal from at least one of the two pressure sensors 13a and 13b exceeds the specified value, the control unit 17 outputs to the switch signal output unit 16aa the instruction signal to instruct that the selected place to which the signal from the selector switch 16a is outputted should be the amplifier 15a. By doing this, the switch signal output unit 16aa outputs the switch signal based on the above-mentioned instruction signal, and switches the selected place to which the signal of the selector switch 16a is outputted to the amplifier 15a.

As a result, the audio sounds based on the audio signals are outputted from the front speaker 11b and the rear speaker 11c and 11d, and at the same time, the telephone conversation voice of the other party of the telephone conversation is outputted from the two driver's speakers 11e, which are buried in the headrest 51a, as was stated above.

Namely, while the status of the audio unit 40 is on and there is a fellow passenger, when the driver makes a hands-free telephone conversation, because the telephone conversation voice of the other party of the telephone conversation is outputted from the driver's speakers 11e, which are near the driver's ears, and at the same time, the audio sounds are outputted from the front speaker 11b, which is distant from the driver, and the rear speakers 11c and 11d, even if the telephone conversation voice flows into the front passenger seat, the voice is masked by the audio sounds outputted from the front speaker 11b and the rear speakers 11c and 11d, which further prevents the fellow passenger from hearing the telephone conversation voice. Additionally, among the front speakers 11a and 11b and the rear speakers 11c and 11c, the front speaker 11a, which is the closest to the driver's seat 51, stops outputting the audio sounds, which prevents the driver from having a hard time listening to the telephone conversation voice.

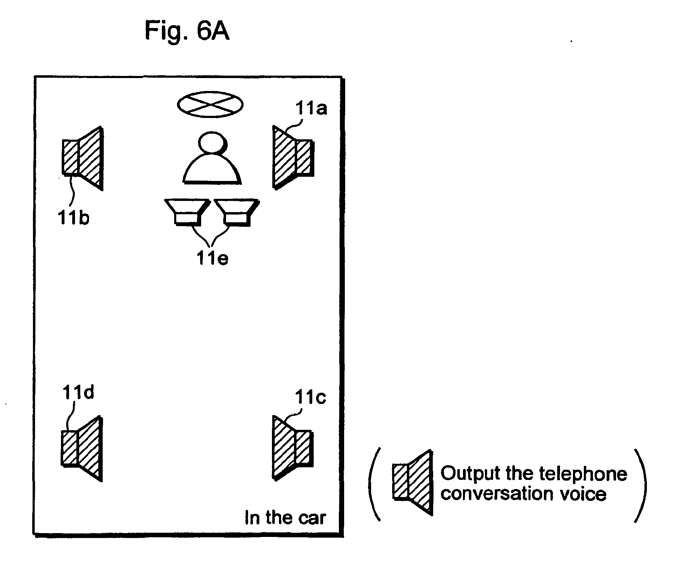

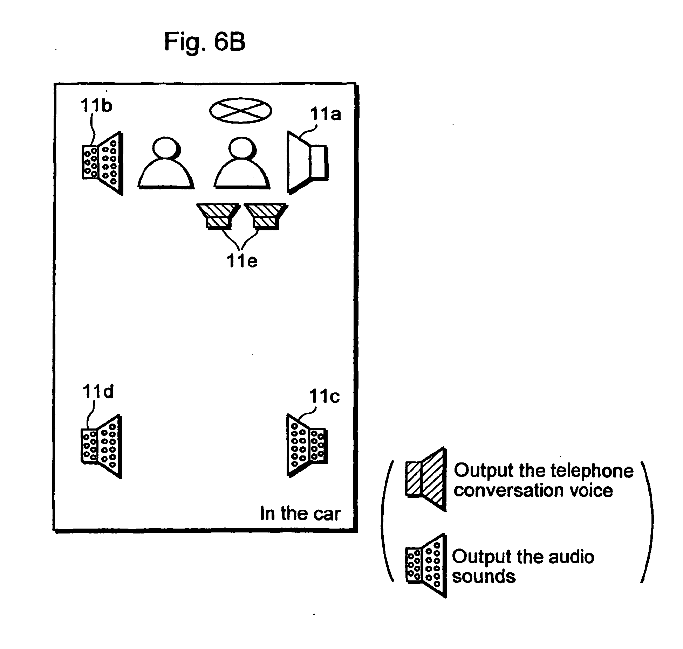

Here, the above-mentioned operations will be explained in brief with reference to Fig. 6.

Fig. 6 is an explanatory diagrams that explains the output situation of the situation of the front speakers 11a and 11b, the rear speakers 11c and 11d, and the driver's speaker 11e while the status of the audio unit 40 is on and when the driver makes a hands-free telephone conversation. Fig. 6A is an explanatory diagram when there is no fellow passenger, and Fig. 6B is an explanatory diagram when there is a fellow passenger.

As was stated above, while the status of the audio unit 40 is on, the cellular phone 90 has no incoming call, and the status of the cellular phone 90 does not become off hook, the audio sounds based on the audio signals are outputted from the front speakers 11a and 11b and the rear speakers 11c and 11d.

However, while the status of the audio unit 40 is on, when the status of the cellular phone 90 becomes off hook and a hands-free telephone conversation is made, when there is no fellow passenger on the front passenger seat 52, the telephone conversation voice of the other party of the telephone conversation is outputted from the front speakers 11a and 11b and the rear speakers 11c and 11d as Fig. 6A shows.

By doing this, the driver can hear the telephone conversation voice of the other party of the telephone conversation in good sound quality.

On the other hand, when there is a fellow passenger on the front passenger seat 52, while the status of the audio unit 40 is on, when the status of the cellular phone 90 becomes off hook and a hands-free telephone conversation is made, as Fig. 6B shows, the front speaker 11b and the rear speakers 11c and 11d output the audio sounds based on the audio signals, the telephone conversation voice of the other party of the telephone conversation is outputted from the two driver's speakers 11e, and the voice output from the front speaker 11a stops.

By doing this, the driver can hear easily the telephone conversation voice of the other party of the telephone conversation, and at the same time, the fellow passenger has a hard time hearing the telephone conversation voice.

Next, a variant of the hands-free system according to the present embodiment will be explained.

For a start, a variant example of the detection unit 13 will be explained.

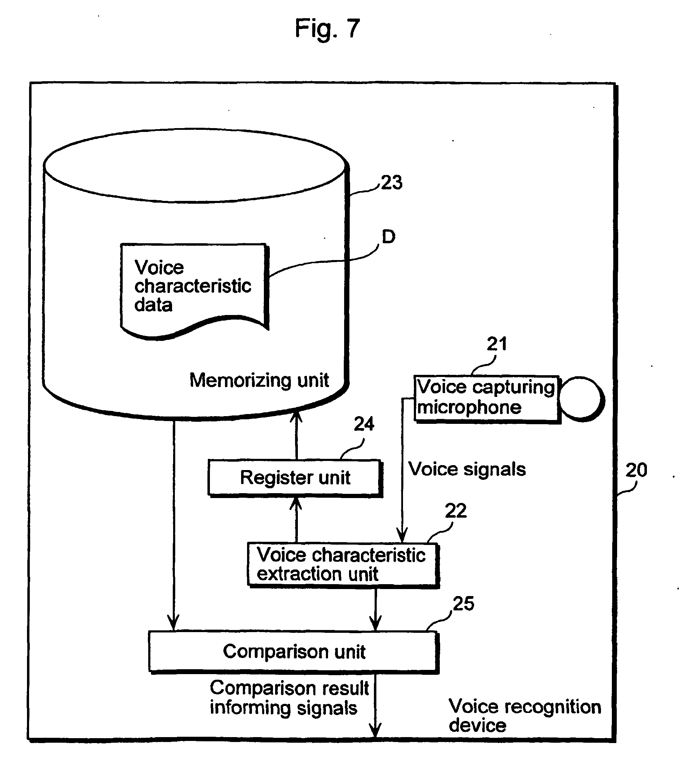

Fig. 7 is a diagram that shows the inner structure of the voice recognition device 20.

According to the present embodiment, the hands-free system includes the detection unit 13 comprising the pressure sensor 13a and 13b, the hands-free system according to the variant includes the voice recognition device 20 that captures the propagated voice within the car and recognizes whether the voice is the driver's voice or not instead of this detection unit 13.

As Fig. 7 shows, this voice recognition device 20 comprising: a voice capturing microphone 21 that captures the voice propagated in the car and outputs voice signals; a voice characteristic extraction unit 22 that based on the voice signals outputted from the voice capturing microphone 21, extracts characteristic wave form and spectrum and outputs the extracted characteristic wave form and spectrum as voice characteristic data D; a memorizing unit 23 that memorizes the voice characteristic data D; a register unit 24 that registers the voice characteristic data D outputted from the voice characteristic extraction unit 22 in the memorizing unit 23; and a comparison unit 25 that compares the voice characteristic data D memorized in the memorizing unit 23 with the voice characteristic data D outputted from the voice characteristic extraction unit 22, and outputs a comparison result informing signal.

The voice capturing microphone 21 is installed, for example, in the central part of the ceiling In the car to capture effectively the voice of fellow passengers on the front passenger seat 52 and the back seat 53.

The driver, in advance, pushes a push button switch equipped with the register unit24, sets the register unit 24 in motion, has the voice capturing microphone 21 capture his/her own voice, has the voice characteristic extraction unit 22 output the voice characteristic data D based on the voice, and has the register unit 24 register the voice characteristic data D in the memorizing unit 23. Namely, the memorizing unit 23 memorizes the voice characteristic data D indicating the characteristic wave form and so forth of the driver's voice.

Then, this voice recognition device 20 captures the voice propagated in the car by the voice capturing microphone 21, uses the voice characteristic data D memorized in the memorizing unit 23, and recognizes whether the voice is the driver's voice or not.

In other words, in the voice recognition unit 20, when the voice capturing microphone 21 captures the propagated voice in the car and outputs the voice signals, the voice characteristic extraction unit 22, base on the voice signals, outputs the voice characteristic data D indicating the characteristics of the voice to the comparison unit 25. Then, when the comparison unit 25 receives the voice characteristic data D from the voice characteristic extraction unit 22, reads the voice characteristic data D memorized in the memorizing unit 23, and compares the two voice characteristic data D. As a result, when the comparison unit 25 judges that the two voice characteristic data D are closely analogous to each other or the same data, it outputs the comparison result informing signal indicating that the voice captured by the voice capturing microphone 21 is the driver's voice and when the comparison unit 25 judges that the two voice characteristic data D are not closely analogous to each other and the different data, the comparison unit 25 outputs the comparison result informing signal indicating that the voice captured by the voice capturing microphone 21 is not the driver's voice.

While the voice recognition device is used as the detection unit 13, when the control unit 17 receives the comparison result informing signal indicating that the voice captured by the voice capturing microphone 21 is the driver's voice, it judges that there is no fellow passenger in the car and when the control unit 17 receives the comparison result informing signal indicating that the voice captured by the voice capturing microphone 21 is not the driver's voice, it judges that there is a fellow passenger.

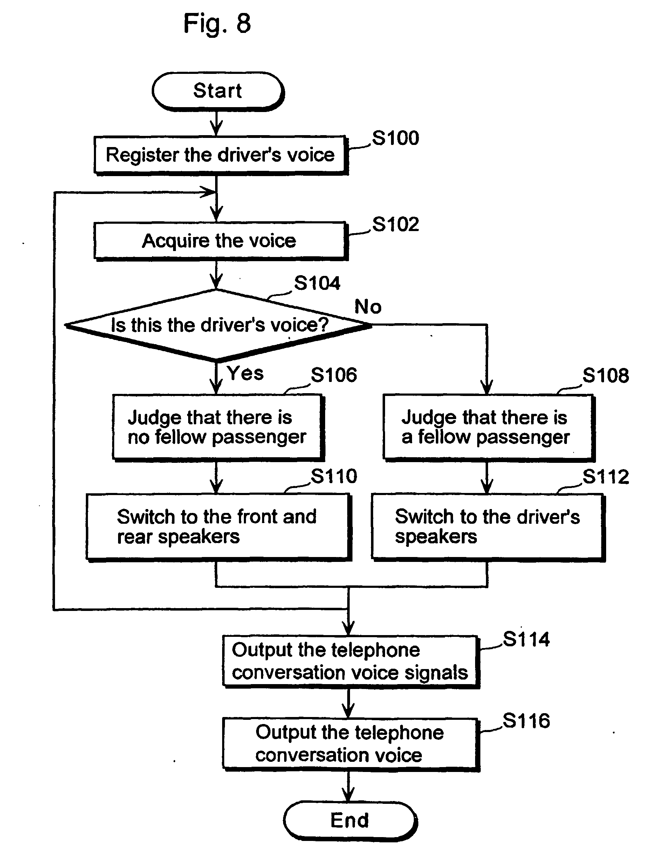

Fig. 8 is a flow chart that shows operations of a hands-free system when the voice recognition device 20 is used as the recognition unit 13.

For a start, the driver registers his/her voice in the voice recognition device 20 in advance. In other words, as was stated above, the driver has the memorizing unit 23 memorize the voice characteristic data D based on his/her voice (Step S100).

Next, the voice recognition device 20 captures the voice within the car. In other words, the voice capturing microphone 21 of the voice recognition device 20 captures the propagated voice within the car and outputs the voice signals (Step S102).

Then, when the voice characteristic extraction unit 22 of the voice recognition device 20 creates the voice characteristic data D based on the voice signals from the voice capturing microphone 21 and outputs the voice characteristic data D to the comparison unit 25, the comparison unit 25 not only receives this voice characteristic data D but also reads the voice characteristic data D memorized in the memorizing unit 23, and recognizes whether the voice captured by the voice capturing microphone 21 is the driver's voice or not by comparing the two voice characteristic data D (Step S104).

Here, when the comparison unit 25 of the voice recognition device 20 judges that the voice captured by the voice capturing microphone 21 is the driver's voice and outputs the comparison result informing signal indicating the result (Yes at Step S104), the control unit 17 judges that there is no fellow passenger in the car because of the comparison result informing signal (Step S 106). By doing this, the control unit 17, similarly as was stated above, outputs the instruction signal to the switch signal output unit 16bb, and the selected places to which the signal of the selector switch 16b is outputted is switched to the amplifiers 15a and 15b for the front speakers 11a and 11b and the rear speakers 11c and 11d (Step S110).

On the other hand, when the comparison unit 25 of the voice recognition unit 20 judges that the voice captured by the voice capturing microphone 21 is not the driver's voice and outputs the comparison result informing signal indicating the result (No at Step S104), the control unit 17 judges that there is a fellow passenger in the car because of the comparison result informing signal (Step S108). By doing this, the control unit 17, similarly as was stated above, outputs the instruction signal to the switch signal output unit 16bb, as a result, the selected place to which the signal of the selector switch 16b is outputted is switched to the amplifier 15c for the driver's speakers 11e (Step S112). Here, when the control unit 17 judges that there is a fellow passenger in the car at the Step S108, it controls the switch signal output unit 16bb so that the selected place to which the signal of the selector switch 16b is outputted should be the amplifier 15c during the specified time. Namely, during the specified time, even if the control unit 17 receives the comparison result informing signal indicating that the voice captured by the voice capturing microphone 21 is the driver's voice from the voice recognition device 20, the control unit 17 does not switch the selected place to which the signal of the selector switch 16b is outputted and keeps the amplifier 15a as the selected place to which the signal of the selector 16b is outputted. As a result, even if the driver and the fellow passenger have a conversation, for example, it is possible to prevent the selected place to which the signal of the selector switch 16b is outputted from switching every time the driver and the fellow passenger have a conversation.

As was stated above, after the selector switch 16b is set to be switched at Step S110 or Step S112, the driver operates the operation unit 18 and makes the status of the cellular phone 90 off hook. Then, when the control unit 17 of the control equipment 10 receives the telephone conversation voice signals from the cellular phone 90 through the communication unit 14, the control unit 17 outputs the telephone conversation voice signals to the selector switch 16b (Step S114).

By doing this, when a hands-free telephone conversation starts and while the selected places to which the signal of the selector switch 16b is outputted are set up to the amplifiers 15a and 15b, the telephone conversation voice of the other party of the telephone conversation is outputted from the front speakers 11a and 11b and the rear speakers 11c and 11d and while the selected place to which the signal of the selector switch 16b is outputted is set up to the amplifier 15c, the telephone conversation voice of the other party of the telephone conversation is outputted from the two driver's speaker 11e (Step S116).

Incidentally, in the above-mentioned case, only the driver's voice characteristic data D are memorized by the memorizing unit 23 of the voice recognition 20, it is acceptable that the voice characteristic data D of the person other than the driver are memorized by the memorizing unit 23.

In this case, the voice characteristic data D include recognition information to recognize whether the voice characteristic data D indicate the driver's voice characteristic or the voice characteristic of the person other than the driver. Additionally, it is acceptable that the plural voice recognition data D are memorized by the memorizing unit 23.

By doing this, when the comparison unit 25 reads the driver's voice characteristic data D from the memorizing unit 23, compares the driver's voice characteristic data D with the voice characteristic data D outputted from the voice characteristic extraction unit 22, even if the two voice characteristic data D are analogous to each other and therefore it is difficult to recognize whether the voice captured by the voice capturing microphone 21 is the driver's voice or not, the comparison unit 25 reads the voice characteristic data D of the person other than the driver from the memorizing unit 23, compares the voice characteristic D with the voice characteristic data D outputted by the voice characteristic extraction unit 22, can easily recognize whether the voice captured by the voice capturing microphone 21 is the driver's voice or not, and the accuracy of the recognition by the comparison unit 25 increases and the processing time to recognize the driver's voice is shortened.

Furthermore, as was stated above, when the plural voice characteristic data D are memorized by the memorizing unit 23, it is acceptable that each voice characteristic data D includes the specific address of the devices (for example, MAC address (Media Access Control address)) assigned to the cellular phone 90 of the person corresponding to the voice characteristic data D.

In this case, the control unit 17 of the control equipment 10 acquires, through the communication unit 14, the above-mentioned address of the cellular phone 90 whose communication link with the communication unit 14 is established, and transmits the address to the comparison unit 25 of the voice recognition device 20. Then, the comparison unit 25 compares the address received from the control unit 17 with the address included in each voice characteristic data D registered in the memorizing unit 23, and recognize the voice characteristic data D that includes the identical address as the driver's voice characteristic data D.

By doing this, for example, when the driver switches to another person, the cellular phone 90 whose communication link with the communication unit 14 is established also switches to the cellular phone 90 that the person owns, when the person's voice characteristic data D are registered in the memorizing unit 23, it is possible that the user has the voice recognition device 20 output the appropriate comparison result informing signal according to whether there is a fellow passenger in the car or not, without changing the recognition information of the voice characteristic data D registered in the memorizing unit 23.

Next, another variant of the detection unit 13 is explained.

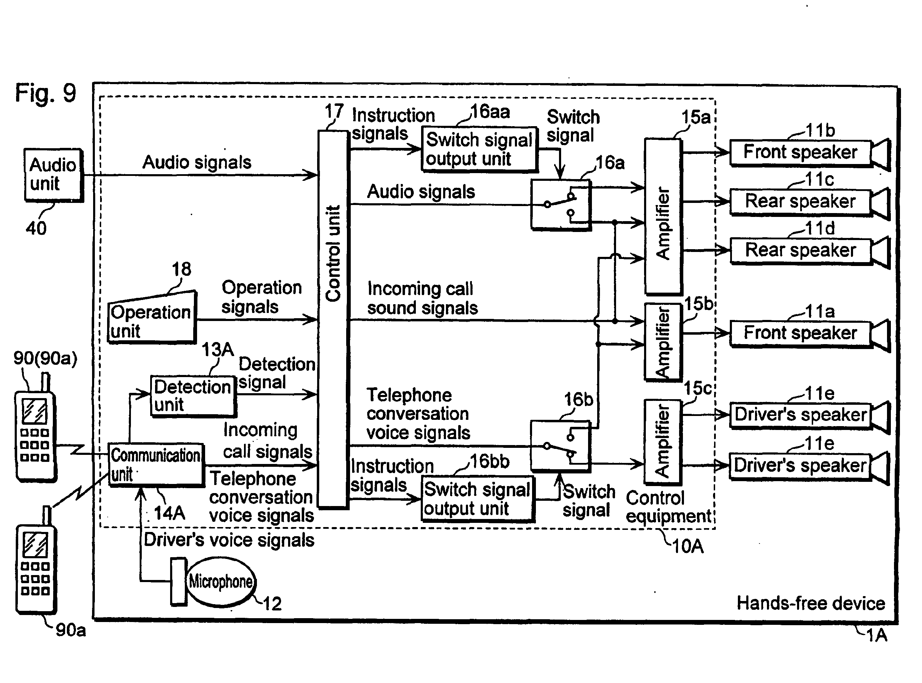

Fig. 9 is a diagram that shows a structure of a hands-free system according to a variant.

The hands-free system according to this variant comprises a hands-free device 1A and a cellular phone 90. The hands-free device 1A includes: front speakers 11a and 11b; rear speakers 11c and 11d; driver's speakers 11e; a microphone 12; and control equipment 10A.

This control equipment 10A comprising: amplifiers 15a, 15b, and 15c; selection switches 16a and 16b; switch signal output unit 16aa and 16bb; a control unit 17; an operation unit 18, a communication unit 14A; and a detection unit 13A.

The communication unit 14A not only does similar operations to the above-mentioned communication unit 14, but also outputs a signal indicating the communication status among other communication devices to the outside.

The detection unit 13A, based on the signal outputted from the communication unit 14A, recognizes whether there is only one cellular phone that can communicate with the communication unit 14A or there are plural cellular phones in the car, and outputs a detection signal in response to the recognized result.

The control device 17 of the control equipment 10A, as stated above, searches a cellular phone 90a in the car that can communicate with the communication unit 14A conforming to the communication standards of Bluetooth ®.

The control unit 17 has the communication 14A broadcast an inquiry command that inquires whether the cellular phone 90a can communicate with the communication unit 14A. Then, the control unit 17 waits for the communication unit 14A to receive a response message, and finds out the cellular phone 90a that can communicate with the communication unit 14 by the response message received.

The detection unit 13A recognizes how many response messages the communication unit 14A has received to the inquiry command broadcast once, when there is only one response message, the detection unit 13A judges that there is only one cellular phone 90a and when there are plural response messages, the detection unit 13A judges that there are plural cellular phones 90a, and the detection unit 13A outputs the judgment result to the control unit 17 as a detection signal. Incidentally, even though devices that can communicate conforming to the communication standards of Bluetooth ®, for example, PDA (Personal Digital Assistant), a laptop, a digital camera, and so forth, are brought in the car and come into the communication area of the communication unit 14A, these devices transmit a message that includes specific information different from the above-mentioned response message. Therefore, the detection unit 13A does not judge the number of the cellular phone 90a including these devices based on the above-mentioned specific message.

When the control unit 17, based on the above-mentioned detection signal, recognizes that there is only one cellular phone 90a that can communicate with the communication unit 14A, and judges that there is no fellow passenger. On the other hand, the control unit 17, based on the detection signal, recognizes that there are plural cellular phones 90a that can communicate with the communication unit 14A, and judges that there is a fellow passenger.

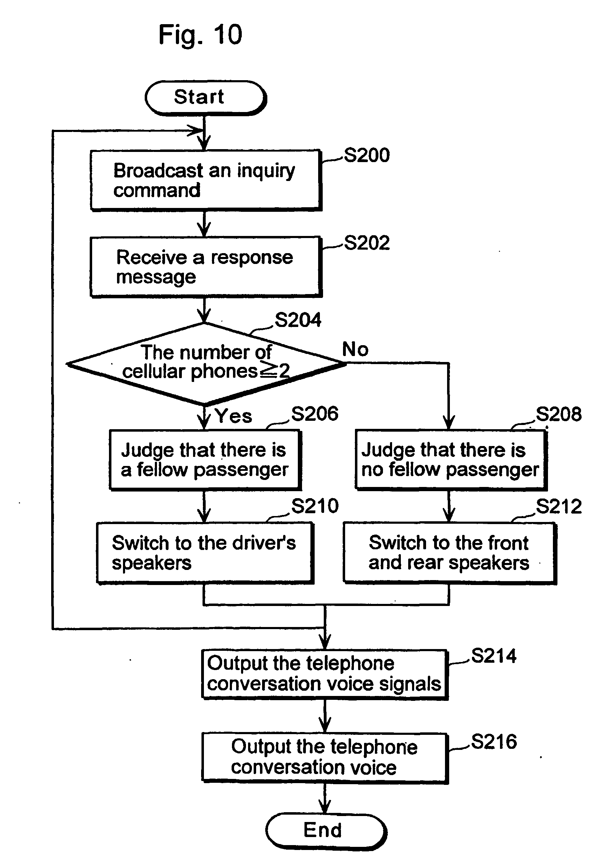

Fig. 10 is a flow diagram that shows operations of a hands-free device including the above-mentioned detection unit 13A that judges the number of the cellular phone 90a.

For a start, the communication unit 14A of the control equipment 10A, as was stated above, broadcasts an inquiry command (Step S200), and receives one or plural response message (Step S202).

When the communication unit 14A Informs the detection unit 13A of this received result, the detection unit 13A, based on the received result, as was stated above, judges whether there are plural cellular phones 90a or not, and outputs the judgment result to the control unit 17 as a detection signal (Step S204).

Here, when the detection unit 13A judges that there are plural cellular phones 90a and outputs a signal indicating the result (Yes at Step S204), the control unit 17 judges that there is a fellow passenger in the car based on the detection signal (Step S206). By doing this, the control unit 17, similarly as was stated above, outputs the instruction signal to the switch signal output unit 16bb, and as a result, the selected place to which the signal of the selector switch is outputted is switched to the amplifier 15c or the driver's speakers 11e (Step S210).

On the other hand, the detection unit 13A judges that there is only one cellular phone 90a, and outputs the detection signal indicating the result (No at Step S204), the control unit 17 judges that there is no fellow passenger in the car (Step S208). By doing this, the control unit 17, similarly as was stated above, outputs the instruction signal to the switch signal output unit 16bb, as a result, the selected places to which the signal of the selector switch 16b is outputted are switched to the amplifiers 15a and 15b for the front speakers 11a and 11b and the rear speakers 11c and 11d (Step S212).

As was stated above, after the selector switch 16b is set to be switched at Step S210 or Step S212, the driver operates the operation unit 18 and makes the status of the cellular phone 90, whose communication link with the communication unit 14A is established, off hook. Then, when the control unit 17 of the control equipment 10A receives the telephone conversation voice signals from the cellular phone 90 through the communication unit 14, the control unit 17 outputs the telephone conversation voice signals to the selector switch 16b (Step S214).

By doing this, when a hands-free telephone conversation starts, while the selected places to which the signal of the selector switch 16b is outputted are set to the amplifiers 15a and 15b, the telephone conversation voice of the other party of the telephone conversation is outputted from the front speaker 11a and 11b and the rear speaker 11c and 11d, and while the selected place to which the signal of the selector switch 16b is outputted is set to the amplifier 15c, the telephone conversation voice of the other party of the telephone conversation is outputted from the two driver's speakers 11e (Step S216).

Incidentally, according to the present embodiment and the variant, the audio signals outputted from the control unit 17 are inputted to the amplifiers 15a and 15b through the selector switch 16a. On the contrary, it is acceptable to input the audio signals to the selector switch 16a through the amplifier 15a. Furthermore, according to the present embodiment and the variant, the incoming call signals outputted by the control unit 17 are inputted to the front speakers 11a and 11b and the rear speakers 11c and 11d through the amplifiers 15a and 15b. But it is acceptable to input the incoming call signals only through the amplifier 15b to the front speakers 11a and 11b and the rear speakers 11c and 11d. Furthermore, according to the present embodiments and the variant, the telephone conversation voice signals outputted by the control unit 17 are inputted to the amplifiers 15a, 15b, and 15c, through the selector switch 16b. But it is acceptable to input the telephone conversation voice signals to the selector switch 16b through the amplifier 15c.

In the above-mentioned case, the selector switch 16a switches the selected places, to which the audio signals outputted by the control unit 17 and amplified by the amplifier 15a are outputted, from the three speakers, the front speaker 11b and the rear speakers 11c and 11d to the four speakers, the front speakers 11a and 11b and the rear speakers 11c and 11d, and vice versa. Then, the selector switch 16b switches the selected places, to which the telephone conversation voice signals, outputted by the control unit 17 and amplified by the amplifier 15c are outputted, from the two driver's speakers 11e to the four speakers, the front speakers 11a and 11b and the rear speakers 11c and 11d and vice versa. Additionally, in the above-mentioned case, it is acceptable to compose the amplifiers 15a, 15b, and 15c in one common amplifier.

### (The second embodiment)

Hereinafter, a hands-free system according to the second embodiment of the present invention will be explained with reference to the figures.

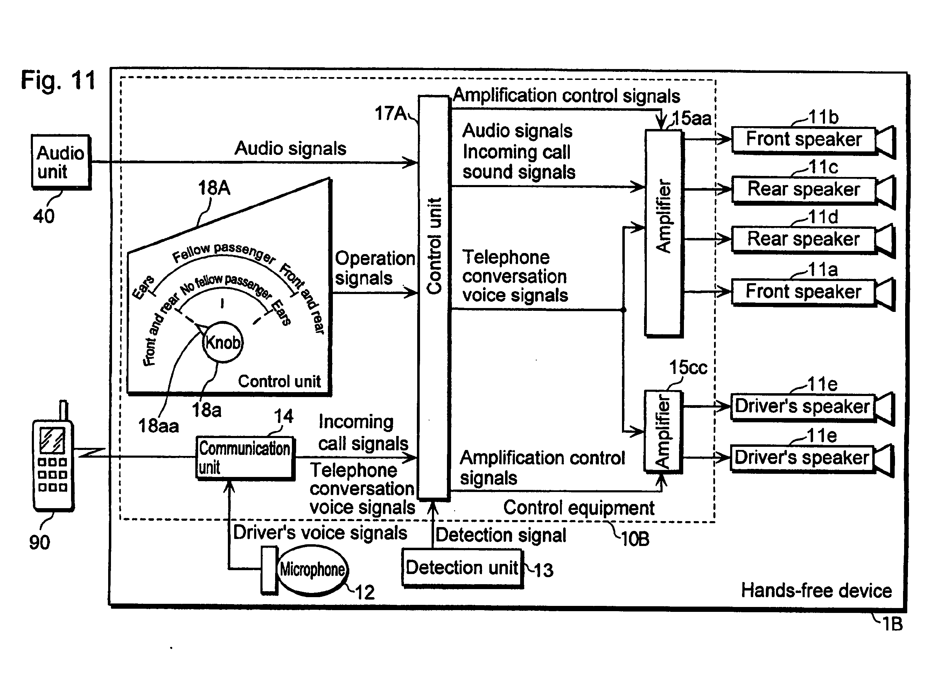

Fig. 11 is a diagram that shows a structure of a hands-free system according to the second embodiment of the present invention.

This hands-free system comprises a hands-free device 1B and a cellular phone 90. The hands-free device 1B includes: a control equipment 10B; front speakers 11a and 11b; rear speakers 11c and 11d; driver's speakers 11e; a detection unit 13; and a microphone 12. Furthermore, the control equipment 10B includes: the communication unit 14; amplifiers 15aa and 15cc; the control unit 17A; and an operation unit 18A. Incidentally, the same elements as the first embodiment are given the same signs and their explanations are omitted (similarly in the drawings below).

The features of the hands-free system according to the embodiment of the present invention are to detect whether there is a fellow passenger in the car or not, to change from small to large the volume of the telephone conversation voice of the other party of the telephone conversation outputted from the front speakers 11a and 11b, the rear speakers 11c and 11d, and the two driver's speakers 11e based on the detection result.

The amplifier 15aa of the operation equipment 10B amplifies input signals and outputs the input signals to the front speakers 11a and 11b and the rear speakers 11c and 11d. The amplifier 15cc amplifies input signals and outputs the input signals to the driver's speakers 11e. Additionally, when these amplifiers 15aa and 15cc input amplification control signals that will be explained later, these amplifiers 15aa and 15cc change the amplification rate of the output signals to the input signals.

The operation unit 18A of the control equipment 10B not only has the same functions as the operation unit 18 of the first embodiment but also has the function that makes it possible to set the each amplification rate of the amplifiers 15aa and 15cc while the control unit 17A outputs the telephone conversation voice signals, and includes a rotary switch and a knob 18a that rotates freely to operate the switch. Additionally, the knob 18a is installed on the surface of the operation unit 18A.

When a driver rotates the knob 18a clockwise, the operation unit 18A instructs to reduce the amplification rate of the amplifier 15aa and at the same time to increase the amplification rate of the amplifier 15cc when there is no fellow passenger, and the operation unit 18A outputs an operation signal that instructs to increase the amplification rate of the amplifier 15aa and at the same time to reduce the amplification rate of the amplifier 15cc when there is a fellow passenger. Additionally, when the driver rotates the knob 18a counterclockwise, contrary to the above-mentioned, the operation unit 18A instructs to increase the amplification rate of the amplifier 15aa and at the same time to reduce the amplification rate of the amplifier 15cc when there is no fellow passenger, and the operation unit 18A outputs the operation signal that instructs to reduce the amplification rate of the amplifier 15aa and at the same time to increase the amplification rate of the amplifier 15cc. Additionally, the present embodiment is used with the knob 18a rotated counterclockwise so that a needle 18aa that sticks out form the knob 18a turns to the left. In other words, the operation unit 18A is set to output an operation signal to instruct that the amplification rate of the amplifier 15aa should be larger than the amplification rate of the amplifier 15cc when there is no fellow passenger and that the amplification rate of the amplifier 15aa should be smaller than the amplification rate of the amplifier 15cc.

Here, operations of the control unit 17A of the control equipment 10B are explained in detail.

The control unit 17A outputs the incoming call sound signals, the telephone conversation voice signals, and the audio signals to the amplifiers 15aa and 15cc, and at the same time outputs the above-mentioned amplification control signals that instructs the amplification rates of the amplifiers 15aa and 15cc.

For example, when the cellular phone 90 does not have communication with another telephone through the telephone line network 613, and the status of the audio unit 40 is on, the control unit 17A receives audio signals from the audio unit 40, and outputs the audio signals to the amplifier 15aa. At this time, the control unit 17A outputs the amplification control signals to the amplifier 15aa so that the amplification rate keeps the specified value regardless of the setting of the knob 18a of the operation unit 18A. In other words, when there is no incoming call to the cellular phone 90 and a hands-free telephone conversation is not made, while the status of the audio unit 40 is on, the audio sounds based on the audio signals outputted by the audio unit 40 are outputted from the front speakers 11a and 11b and the rear speakers 11c and 11d.

Then, when there is an incoming call to the cellular phone 90 and the control unit 17A receives the incoming call signals from the communication unit 14, the control unit 17A outputs the incoming call sound signals to the amplifier 15a. Here, when the control unit 17A receives the incoming call signals while the control unit 17A outputs the audio signals to the amplifier 15aa as was stated above, the control unit 17A stops outputting the audio signals and outputs the incoming call sound signals instead of the audio signals. At this time also, the control unit 17A outputs the amplification control signals so that the amplification rate of the amplifier 15aa keeps the specified value regardless of the setting of the knob 18a of the operation unit 18A. As a result, the incoming call sounds that inform that the cellular phone 90 receives an incoming call are outputted from the front speakers 11a and 11b and the rear speakers 11c and 11d.

Furthermore, when the driver operates the operation unit 18A and makes the status of the cellular phone off hook, and therefore the cellular phone comes to be able to make a hands-free telephone conversation, the control unit 17A receives the telephone conversation voice signals from the communication unit 14, and outputs the telephone conversation voice signals to the amplifier 15aa. Here, as was stated above, while the control unit 17A outputs the audio signals or the incoming call sound signals to the amplifier 15aa and when the cellular phone 90 comes to be able to make a hands-free telephone conversation, the control unit 17A stops outputting the audio signals or the incoming call sound signals, and outputs the telephone conversation voice signals instead to the amplifiers 15aa and 15cc. Then, when the control unit 17A outputs the telephone conversation voice signals as was stated above, outputs the amplification control signals to each of the amplifiers 15aa and 15cc according to the operation signals outputted by the setting of the above-mentioned knob 18a from the operation unit 18A and the detection signal from the detection unit 13.

Here, to be more specific, the operations of the hands-free system when the cellular phone 90 comes to be able to maker a hands-free telephone conversation will be explained.

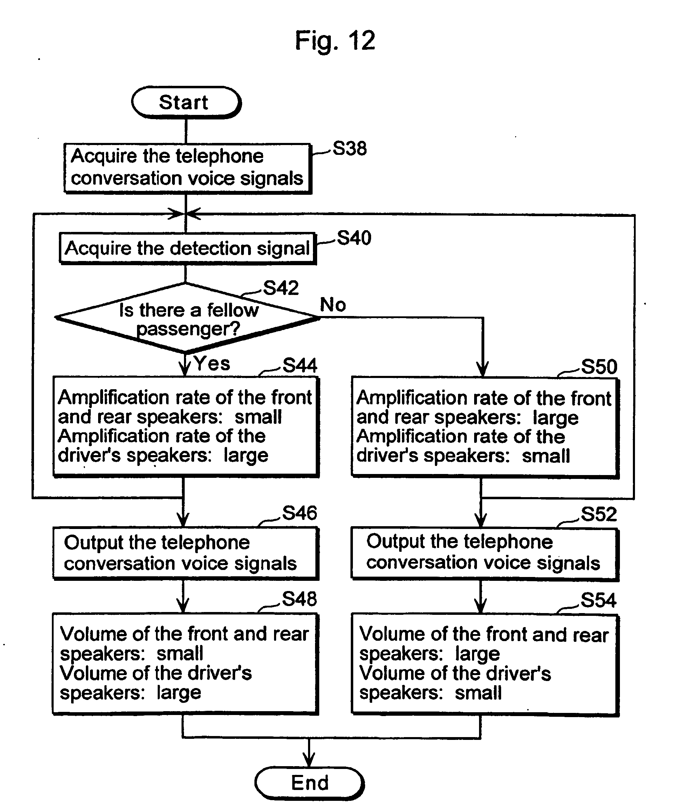

Fig. 12 is a flow diagram that shows operations of a hands-free system when the cellular phone 90 comes to be able to make a hands-free telephone conversation.

When the cellular phone 90 comes to be able to make a hands-free telephone conversation, the control 17A receives the telephone conversation voice signals from the communication unit 14 (Step S38).

Then, the control unit 17A, which has received the telephone conversation voice signals, acquires the detection signal from the two pressure sensors 13a and 13b of the detection unit 13 (Step S40).

The control unit 17A realizes that voltage readings acquired from each detection signal are below the specified value, and judges that a hands-free telephone conversation is made when there is no fellow passenger (No at Step S42).

Then, based on the above-mentioned judgment result and the contents instructed by the operation signals from the operation unit 18A, the control unit 17A outputs the amplification control signals to each of the two amplifiers 15aa and 15cc. As a result, the amplification rate of the amplifier 15aa at the side of front speakers 11a and 11b and the rear speakers 11c and 11d becomes large, and the amplification rate of the amplifier 15cc at the side of the driver's speakers 11e becomes small (Step S50).

Later, the control unit 17A outputs the telephone conversation voice signals to the both of the amplifiers 15aa and 15cc (Step S52).

As a result, the telephone conversation voice of the other party of the telephone conversation is outputted in a large sound volume from the front speakers 11a and 11b and the rear speakers 11c and 11d and in a small sound volume from the two driver's speakers 11e at the headrest 51a (Step S54).

Additionally, at the step S42, when the control unit 17A realizes that the voltage reading of at least one of the pressure sensors 13a and 13b of the detection unit 13 exceeds the specified value, the control unit 17A judges that a hands-free telephone conversation is made when there is a fellow passenger (Yes at Step S42).

Then, based on the above-mentioned judgment result and the contents instructed by the operation signals from the operation unit 18A, the control unit 17A outputs the amplification control signals to each of the two amplifiers 15aa and 15cc. As a result, the amplification rate of the amplifier 15aa at the side of front speakers 11a and 11b and the rear speakers 11c and 11d becomes small, and the amplification rate of the amplifier 15cc at the side of the driver's speakers 11e becomes large (Step S44)

Later, the control unit 17A outputs the telephone conversation voice signals to the both of the amplifiers 15aa and 15cc (Step S46).

As a result, the telephone conversation voice of the other party of the telephone conversation is outputted in a small sound volume from the front speakers 11a and 11b and the rear speakers 11c and 11d and in a large sound volume from the two driver's speakers 11e at the headrest 51a (Step S48).

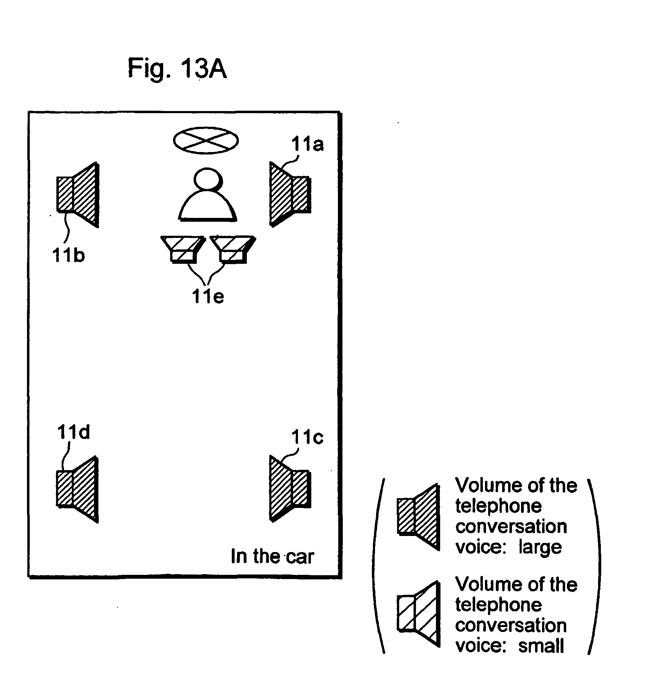

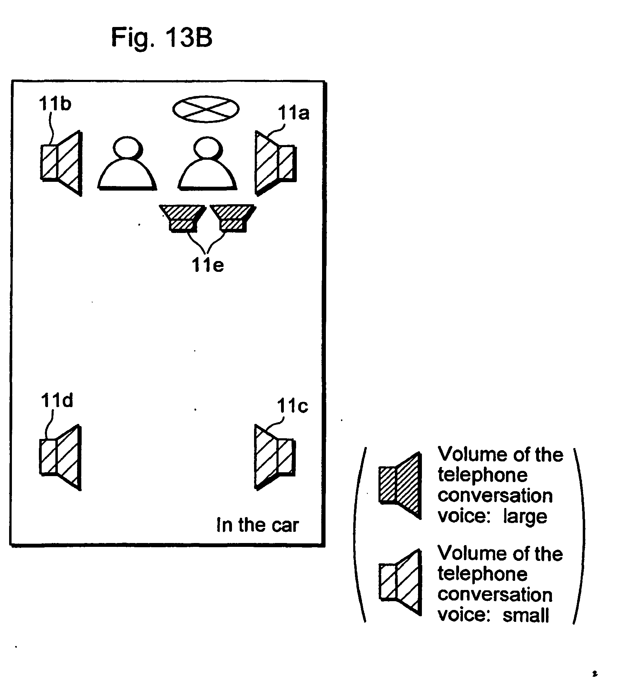

Fig. 13 is an explanatory diagram that explains the output situation of the front speakers 11a and 11b, the rear speakers 11c and 11d, and the driver's speakers 11e, and Fig. 13A is an explanatory diagram when there is no fellow passenger, and Fig. 13B is an explanatory diagram when there is a fellow passenger.

As was explained above, a hands-free telephone conversation is made when there is no fellow passenger, and the control unit 17A receives the operation signals in response to the above-mentioned setting of the knob 18a from the operation unit 18A, and outputs the amplification control signals to each of the amplifiers 15aa and 15cc so that the amplification rate of 15aa becomes large and the amplification rate of 15cc becomes small. As a result, as the Fig. 13A shows, the telephone conversation voice of the other party of the telephone conversation is outputted in a small sound volume from the two driver's speakers 11e at the headrest 51a and in a large sound volume from the front speakers 11a and 11b and the rear speakers 11c and 11d. On the other hand, a hands-free telephone conversation is made when there is a fellow passenger, and the control unit 17A receives the operation signals in response to the above-mentioned setting of the knob 18a from the operation unit 18A, and outputs the amplification control signals to each of the amplifiers 15aa and 15bb so that the amplification rate of the amplifier 15aa reduces and the amplification rate of the amplifier 15cc increases. As a result, as Fig. 13B shows, the telephone conversation voice of the other party of the telephone conversation is outputted in a large sound volume from the two driver's speakers 11e at the headrest 51a and in a small sound volume from the front speakers 11a and 11b and the rear speakers 11c and 11d.

As just described, according to the present embodiment, because the control unit 17A changes the amplification rate of the amplifiers 15aa and 15cc in response to the detection signal of the detection unit 13, when the driver makes a hands-free telephone conversation while there is no fellow passenger, the telephone conversation voice of the other party of the telephone conversation is outputted mainly from the front speakers 11a and 11b and the rear speakers 11c and 11d, and propagates in the car, the driver can hear the telephone conversation voice in a good sound quality. When there is a fellow passenger, the telephone conversation voice of the other party of the telephone conversation is outputted mainly by the two driver's speakers 11e, which are near the driver's ears, and therefore it is possible to prevent the fellow passenger from hearing the telephone conversation voice, and the privacy is protected.

### (The third embodiment)

Hereinafter, a hands-free system according to the third embodiment of the present invention will be explained with reference to the figures.

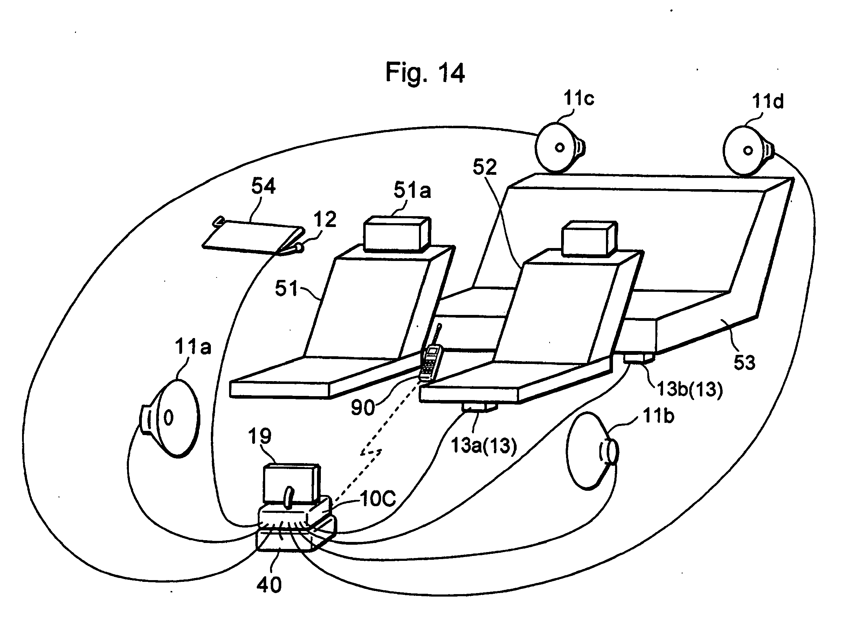

Fig. 14 is a diagram that shows an outline structure of a hands-free system according to the third embodiment of the present invention.

The features of this hands-free system are to detect whether there is a fellow passenger in the car or not and to display in letters the contents of the telephone conversation voice of the other party of the telephone conversation when there is a fellow passenger. This hands-free system comprising: front speakers 11a and 11b; rear speakers 11c and 11d; driver's speakers 11e; a detection unit 13; a microphone 12; a cellular phone 90; and control equipment 10C. Additionally, this hands-free system does not have the driver's speakers 11e in contrast to the first and second embodiments. Incidentally, the same elements as the first and second embodiments are given the same signs and their explanations are omitted (similarly in the drawings below)

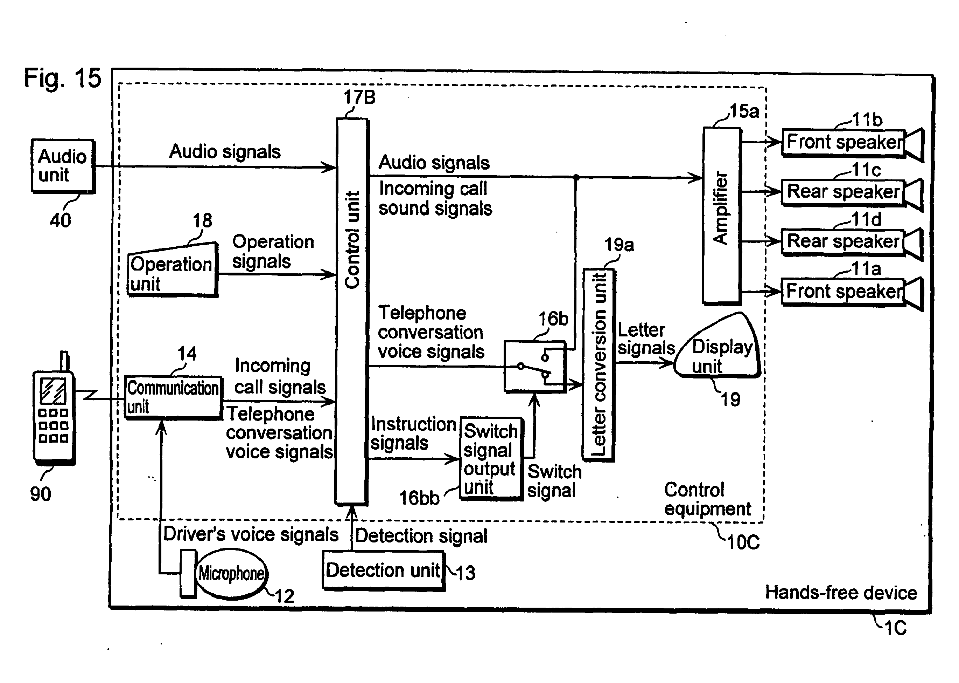

Fig. 15 is a diagram that shows a structure of a hands-free device 1C according to the present embodiment.

According to the present embodiment, the hands-free device 1C comprising: front speakers 11a and 11b; rear speakers 11c and 11d; a microphone 12; a detection unit 13; and control equipment 10C.

The control equipment 10C, like the first and second embodiments, includes: a communication unit 14; an amplifier 15a; a selector switch 16b; a switch signal output unit 16bb; an operation unit 18; and a control unit 17B. The control equipment 10C further includes: a display unit 19 that displays letters and picture images in response to input signals; a letter conversion unit 19a that based on telephone conversation voice signals outputted from the control unit 17B, creates letter signals that display contents of the telephone conversation voice in letters in the display unit 19, and outputs the letter signals as the above-mentioned input signals to the display unit 19. Here, according to the present embodiment, the display unit 19 and the letter conversion unit 19a compose display means.

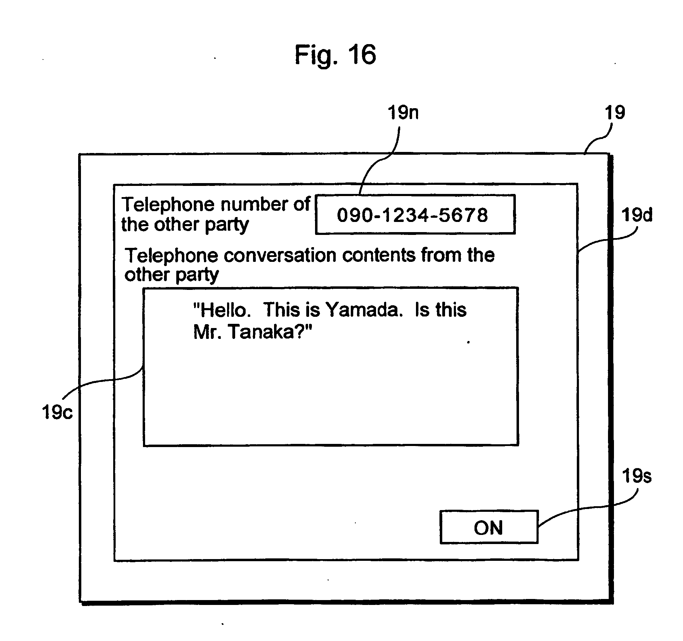

The display unit 19 is equipped with, for example, a liquid crystal display 19d (refer to Fig. 16), and on this liquid crystal display 19d, the letters in response to the above-mentioned letter signals are displayed. Additionally, the control equipment 10C is Installed in the car with the liquid crystal display tilted to the driver's seat so that only the driver can see the contents displayed on the liquid crystal display 19d of the display unit 19.

The amplifier 15a, like the first embodiment, amplifies the input signals, and outputs the signals to the front speakers 11a and 11b and the rear speakers 11c and 11d. Then, the selector switch 16b switches the selected place to which the input signals are outputted from the above-mentioned amplifier 15a to the letter conversion unit 19a and vise versa in response to the switch signal from the switch signal output unit 16bb.

Additionally, according to the present embodiment, while the control unit 17B receives the audio signals from the audio unit 40, the control unit 17B outputs the audio signals to the amplifier 15a, and while the control unit 17B receives the incoming call signals from the communication unit 14, the control unit 17B outputs the incoming call sound signals to the amplifier 15a. Here, while the control 17B receives the audio signals and the incoming call signals, the control 17B gives a priority to the incoming call sound signals and outputs the incoming call sound signals to the amplifier 15a.

Furthermore, when the control unit 17B receives the telephone conversation voice signals from the communication unit 14, the control unit 17B outputs the telephone conversation voice signals to the selector switch 16b.

Moreover, when voltage readings of the detection signals from the two pressure sensors 13a and 13b are below the specified value, the control unit 17B realizes that there is no fellow passenger on the front passenger seat and the back seat, and outputs to the switch signal output unit 16bb an instruction signal to instruct that the selected place to which the signal of the selector switch is outputted should be the amplifier 15a.

On the other hand, when the voltage reading of at least one of the detection signals from the two pressure sensors 13a and 13b of the detection unit 13 exceeds the specified value, the control unit 17 judges that there is a fellow passenger in the car, and outputs to the switch signal output unit 16bb an instruction signal to instruct that the selected place to which the signal of the selector switch is outputted should be the letter conversion unit 19a.

As a result, when the status of the audio unit 40 is on, the audio sounds are outputted from the front speakers 11a and 11b and the rear speakers 11c and 11d and at this status when the cellular phone 90 receives an incoming call, the output of the audio sounds is stopped, and the incoming call sounds are outputted from the front speakers 11a and 11b and the rear speakers 11c and 11d. Then when the driver operates the operation unit 18 and starts a hands-free telephone conversation, the telephone conversation voice of the other party of the telephone conversation becomes letters, which are displayed on the liquid crystal display19d of the display unit 19. At this time, when the status of the audio unit 40 is on, the audio sounds are outputted from the front speakers 11a and 11b and the rear speakers 11c and 11d, and therefore the driver can grasp the telephone conversation voice of the other party of the telephone conversation by reading the letters on the liquid crystal display 19d while listening to the audio sounds.

Fig. 16 is a screen display diagram that shows an example of a screen displayed on a display unit 19 while a hands-free telephone conversation is made.

As Fig. 16 shows, while a free-hands telephone conversation is made, a telephone number display field 19n, a telephone conversation contents display field 19c, and a status display field 19s are displayed on the liquid crystal display 19d of the display unit.

In the telephone number display field 19n, the telephone number of the other party of the telephone conversation, for example, "090-1234-5678" is displayed. In the telephone conversation contents display field 19c, the telephone conversation contents from the other party of the telephone conversation, for example, "Hello. This is Yamada. Is this Mr. Tanaka?", are displayed. In the status display field 19s, the letters "ON" are displayed to show that the telephone conversation is going on.

By looking at this liquid crystal display 19d of the display unit 19, the driver realizes whether the telephone conversation is going on or not from the status display filed 19s, and at the same time, finds out the telephone number of the other party of the telephone conversation from the telephone number display field 19n, and furthermore, can grasp the telephone conversation contents by reading the letters displayed on the telephone conversation contents display field 19c.

In other words, according to the present embodiment, in the case of a hands-free telephone conversation being made, when there is no fellow passenger in the car, the telephone conversation voice from the other party of the telephone conversation is outputted from the front speakers 11a and 11b and the rear speakers 11c and 11d, and therefore the driver can hear the telephone conversation voice in good sound quality. When there is a fellow passenger, the telephone conversation contents from the other party of the telephone conversation are displayed on the display unit 19, and therefore it is possible to prevent the fellow passenger from knowing the telephone conversation contents of the other party of the telephone conversation. Additionally, because the liquid crystal display 19d of the display unit 19 is tilted to the driver's seat 51, it is possible to prevent the fellow passenger from reading the letters displayed on the liquid crystal display 19d.

Additionally, when the control unit 17B detects that the communication unit 14 receives the driver's voice signals from the microphone 12, the control unit 17B has the communication unit 14 transmit the driver's voice signals to the cellular phone 90, and at the same time has the display unit 19 erase the past letters that show the contents of the telephone conversation voice from the other party of the telephone conversation displayed on the liquid crystal display 19d of the display unit 19.

For example, with the telephone conversation contents display field 19c display the letters that shows the telephone conversation contents like "Hello. This is Yamada. Is this Mr. Tanaka?", when the driver responds to the telephone conversation contents and utters a voice, "Yes, this is he speaking." to the microphone 12, the microphone 12 transmits the driver's voice signals indicating the voice, "Yes, this is he speaking." to the communication unit 14. Then, when the control unit 17B detects that the communication unit 14 has received the driver's voice signals, the control unit 17B has the communication 14 transmit the driver's voice signals to the cellular phone 90, and at the same time, has the display unit 19 erase the past letters displayed on the telephone conversation contents display field 19c, "Hello. This is Yamada. Is this Mr. Tanaka?"

As a result, when the control unit 17B receives the telephone conversation voice signals afresh from the communication unit 14, as was stated above, the control unit 17B, the letter conversion unit 19a, and the display unit 19 operate, and therefore, on the telephone conversation contents display field 19c of the display unit 19, the telephone conversation contents indicated by the latest telephone conversation voice signals, for example, "Mr. Tanaka. How are you?" only are displayed in letters.

By doing this, the driver, without being bewildered by the past letters displayed on the telephone conversation contents display field 19c, can see easily the latest letters.

Incidentally, according to the present embodiment, the control equipment 10C includes the display unit 19, which displays the telephone conversation contents by letters. But when a display device that can display any letters is installed in the car, it is acceptable for the display device to display the telephone conversation contents by letters. For example, when the car is equipped with a navigation system that displays maps and guides the driver to the destinations and so forth, it is acceptable for the display device that is equipped with the navigation system and displays the maps (for example, liquid crystal display) to display the telephone conversation contents by letters.

In this case, the control equipment 10C and the navigation system are connected by cable or wireless so that the letter signals outputted from the letter conversion unit 19a of the control equipment 10C are inputted to the above-mentioned display device.

By doing this, it is needless for the control equipment 10C to have the display unit 19, and therefore, It is possible to lessen the component parts, to make the equipment 10C smaller, and to reduce the cost.

Up to this point, the hands-free system according to the present invention is explained using the embodiments 1~3. But the present invention is not limited by them.

For example, according to the first and second embodiments, the driver's speakers 11e are explained as the speakers with directional characteristic. But it is acceptable that the driver's speakers 11e do not have the directional characteristic in the case of the outputted sound being hard for a fellow passenger to hear. In other words, when each of the driver's speakers 11e is buried in the headrest 51a so that the driver's speakers 11e cover the ears of the driver who sits on the driver's seat 51, it is acceptable that the driver's speakers 11e do not have the directional characteristic.

Here, in the case of using the driver's speakers 11e that do not have the directional characteristic, it is acceptable to use a speaker that outputs the sound by vibrating a diaphragm made of a piezoelectric elements, for example, like the speaker made by Matsushita Communication Industrial Co., Ltd, (the brand name "card speaker", the model number "WM-R30B" or "WM-R57A") as the driver's speaker 11e. In this case, it is possible to make the driver's speaker 11e smaller and thinner, and therefore it is easier to bury the two driver's speakers 11e to the headrest 51a and also it is possible for the headrest 51a and the driver's speakers 11e to look better.

Furthermore, according to the first and second embodiments, the two driver's speakers 11e are buried in the headrest 51a. But in the case of the sound outputted by the driver's speakers 11e being hard for a fellow passenger other than the driver to hear, it is acceptable to install the driver's speakers 11e at any place in the car and to install the driver's speakers 11e, for example, on the ceiling of the car.

Additionally, according to the first and second embodiments, the two driver's speakers are buried in the headrest 51a of the driver's seat 51, but it is acceptable to bury two speakers with directional characteristic like the driver's speakers 11e in the headrest of the front passenger's seat and for a fellow passenger who sits on the front passenger's seat to make a hands-free telephone conversation using his/her own cellular phone.

In this case, the hands-free systems 1, 1A, and 1B further include the fellow passenger's microphone that captures the voice of the above-mentioned fellow passenger and outputs the signals indicating the voice to the communication units 14, 14A. The control equipment 10, 10A, and 10B further include an amplifier like the amplifier 15c. The communication units 14 and 14A communicate not only with the driver's cellular phone 90 but also with the fellow passenger's cellular phone, receives the telephone conversation voice signals indicating the telephone conversation voice of the other party of the telephone conversation of the fellow passenger from the fellow passenger's cellular phone, and output the telephone conversation signals to the above-mentioned amplifier, which amplifies the telephone conversation voice signals and outputs the amplified telephone conversation voice signals to the above-mentioned fellow passenger's speakers buried in the headrest of the front passenger's seat. Then, the communication units 14 and 14A transmit the signals outputted from the above-mentioned fellow passenger's microphone to the fellow passenger's cellular phone.

By doing this, the fellow passenger who sits in the front passenger's seat 52 can make a hands-free telephone conversation, preventing the driver and another fellow passenger from hearing the telephone conversation voice of the other party of the telephone conversation.

Furthermore, according to the first and second embodiments, each of the front speakers 11a and 11b, the rear speakers 11c and 11d, the driver's speakers 11e, the microphone 12, the detection unit 13, audio unit 40, and the cellular phone 90 is connected with the control equipment 10, 10A, and 10B. But it is acceptable to connect them each other by LAN (Local Area Network), for example, like MOST (Media Oriented System Transport) and so forth installed in the car. Similarly, in the third embodiment, it is acceptable to connect the front speakers 11a and 11b, the rear speakers 11c and 11d, the microphone 12, the detection unit 13, audio unit 40, the cellular phone 90, and the control equipment 10C to each other by LAN (Local Area Network).

Additionally, in the embodiments 1~3, it is acceptable to bury speakers with directional characteristic to the output direction, like the driver's speakers 11e, in the front passenger seat 52 and the back seat 53 and to have the speakers output sounds in response to the signals outputted from the amplifier 15a. In this case, the output direction of the sounds of each speaker buried in the front passenger seat 52 and the back seat 53 is aimed at the fellow passengers who sit on their seats, and these speakers output the audio sounds based on the audio signals.

By doing this, the individual phonetic spaces are created in each seat, and the fellow passenger can hear the audio sounds like music and so forth in good condition without the obstruction of the noise and so forth.

Furthermore, in the embodiments 1~3, the detection unit 13 comprises the pressure sensors 13a and 13b. But it is acceptable for the detection unit 13 to be any of the below: an infrared sensor that receives infrared radiation and detects the change of the received infrared radiation; an ultrasound sensor that transmits ultrasound, receives the ultrasound reflected outside, and detects the change of the ultrasound; a temperature sensor that detects the change of the temperature; a selector that switches on and off by the fastening and unfastening of the seatbeits of the front passenger seat 52 and the back seat 53; a camera that is installed to take pictures of the front passenger seat 52 and the back seat 53 and to detect the change of the picture images taken; and a push button switch that switches on and off by the driver's push operation.

Here, in the embodiments 1~3, the cellular phone 90 and the control equipment 10, 10A, 10B, and 10C communicate by wireless, conforming to the communication standards of Bluetooth ®, but it is acceptable that the cellular phone 90 and the control equipment 10, 10A, 10B, and 10C communicate by wireless like IEEE 802. 11a, IEEE 802. 11b (common name "WiFi (Wireless Fidelity)") and Home RF (Home Radio Frequency a.k.a. SWAP (Shared Wireless Access Protocol)) or by cable like Home PNA (Home Phone line Networking Alliance).

Additionally, in the first embodiment, when the car is equipped with a navigation system that guides the driver to the destinations and so forth, and the navigation system outputs the guide voice signals indicating the guide voice that do the guide, it is acceptable to have the control unit 17 of the control equipment 10 and 10A receive the guide voice signals and output to the amplifiers 15a and 15b. Similarly, in the second and third embodiments, when the above-mentioned navigation system outputs the guide voice signals, it is acceptable to have the control units 17A and 17B of the control equipment 10B and 10C receive the guide voice signals and output to the amplifiers 15a and 15aa.

By doing this, when the driver makes the status of the navigation system on, the front speakers 11a and 11b and the rear speakers 11c and 11d output the guide voice, and therefore the driver can hear the guide voice in good sound quality, and grasps the guide easily like the destinations and so forth.

Furthermore, in the embodiments 1~3, it is acceptable to have the cellular phone 90 receive electric mails transmitted by another cellular phone, a personal computer, and so forth, and transmit the mail signals that indicate the writing contents of the electric mail to the control equipment 10, 10A, 10B, and 10C.

In this case, the control equipment 10, 10A, 10B, and 10C include a mail voice signal output unit that creates the mail voice signals that indicate the writing contents of the electric mail by voice based on the mail signals and outputs the mail voice signals. Then, when the communication units 14 and 14A of the control equipment 10, 10A, 10B and 10C receive the above-mentioned mail signals from the cellular phone 90, the communication units 14 and 14A transmit the mail signals to the control units 17, 17A, and 178, which output the mail signals to the above-mentioned mail voice signal output unit, which inputs the mail signals and then creates the mail voice signals as was stated above and outputs the mail voice signals to the selector switch 16b.

By doing this, while there is no fellow passenger, when the cellular phone receives an electric mail, the writing contents of the electric mail are outputted by voice from the front speakers 11a and 11b and the rear speakers 10c and 10d, and therefore the driver can hear the voice in good sound quality, and grasps the writing contents of the electric mail without reading the letters. Additionally, while there is a fellow passenger, when the cellular phone receives an electric mail, the writing contents of the electric mail are outputted by voice from the driver's speakers 11e, and therefore the driver hears the voice, grasps the writing contents of the electric mail without reading the letters, and at the same time, makes the voice hard for the fellow passenger to hear.

Furthermore, in the first and second embodiments, when a free-hands telephone conversation is not made, the front speakers 11a and 11b and the rear speakers 11c and 11d output the audio sounds like music based on the audio signals, but it is acceptable to output the audio sounds from the two driver's speakers 11e.

Similarly, in the first and second embodiments, when the communication units 14 and 14A outputs the incoming call signals, the front speakers 11a and 11b and the rear speakers 11c and 11d output the incoming call sounds, but it is acceptable to output the incoming call sounds from the two driver's speakers 11e.

## Claims

1. A hands-free device for a driver to make a hands-free telephone conversation using a cellular phone in a car comprising:
a first voice signal outputting device (11e) to output a voice signal to the driver;
a second voice signal outputting device (11a to 11d) to output sound widely in the car;
a detection unit (13) operable to output a detection signal indicating whether there is a fellow passenger or not; and
a control unit (10, 14, 17) operable to communicate with the cellular phone, and operable to judge whether there is a fellow-passenger or not based on the detection signal outputted from the detection unit (13),
upon receiving a telephone conversation voice signal indicating the telephone conversation voice of the other party of the telephone conversation, said control unit (10, 17) is operable to output the telephone conversation voice from the second voice signal outputting device (11a to 11d) when the control unit judges that there is no fellow passenger, and is operable to output the telephone conversation voice from the first voice signal outputting device (11e) when the control unit judges that there is a fellow passenger.

2. The hands-free device according to Claim 1,
wherein the first voice signal outputting device is a first speaker to output sound to the driver, and the second voice signal outputting device is a second speaker to output sound widely in the car.

3. The hands-free device according to Claim 2,
wherein the control unit is operable to prohibit the telephone conversation voice from being outputted from the first speaker and is operable to output the telephone conversation voice from the second speaker when the control unit judges that there is no fellow passenger, and
is operable to prohibit the telephone conversation voice from being outputted from the second speaker and is operable to output the telephone conversation voice from the first speaker when the control unit judges that there is a fellow passenger.

4. The hands-free device according to Claim 2,
wherein the control unit has the telephone conversation voice outputted from the first and second speakers in the condition that the sound volume output by the second speaker is larger than the sound volume output by the first speaker when the control unit judges that there is no fellow passenger, and
has the telephone conversation voice outputted from the first and second speakers in the condition that the sound volume output by the first speaker is larger than the sound volume output by the second speaker when the control unit judges that there is a fellow passenger.

5. The hands-free device according to Claim 2,
wherein the first speaker has directional characteristic that aims output direction of sound at ears of a driver.

6. The hands-free device according to Claim 2,
wherein the second speaker is a group of plural speakers that are installed at plural places in the car and do not have directional characteristic of output sound.

7. The hands-free device according to Claim 2,
wherein the detection unit outputs the detection signal in response to sitting pressure of the fellow passenger.

8. The hands-free device according to Claim 2,
wherein the detection unit outputs the detection signal by detecting presence of infrared radiation and in response to the detection result.

9. The hands-free device according to Claim 2,
wherein the detection unit outputs the detection signal by acquiring voice in the car, judging whether the voice is driver's voice or another person's voice, and in response to the judgment result.

10. The hands-free device according to Claim 2,
wherein the detection unit outputs the detection signal that there is a fellow passenger when the number of the cellular phones brought in the car is plural by detecting the cellular phones and judging whether the number of the cellular phones is one or plural.

11. The hands-free device according to Claim 2,
wherein the control unit further has the audio sound outputted from the second speaker when an audio signal indicating the audio sound including at least one of music, radio sound, and TV sound is outputted in the car in the case that the telephone conversation voice signals are not received from the cellular phone.

12. The hands-free device according to Claim 11, further comprising:
a third speaker that has the directional characteristic of output sound, and is installed on a seat in which the fellow passenger sits with the output direction of sound of the third speaker aimed at ears of the fellow passenger,
wherein the control unit has the audio sound outputted from the second and third speakers when the audio signal is outputted in the car in the case that the control unit does not receive the telephone conversation signal from the cellular phone.

13. The hands-free device according to Claim 11, comprising the plural second speakers,
wherein the control unit prohibits the second speaker that is nearest to the driver's seat among the plural second speakers from outputting the audio sound and outputs the audio sound from other second speaker when the audio signal is outputted in the car in the case that the control unit receives the telephone conversation voice signals.

14. The hands-free device according to Claim 2,
wherein the control unit communicates with the cellular phone through a wireless communication medium.

15. The hands-free device according to Claim 2,
wherein the first speaker has an output characteristic of sound that is almost flat at a frequency from 300Hz to 3.4kHz.

16. The hands-free device according to Claim 2,
wherein the control unit has the second speaker output an incoming call sound that announces an incoming call when the control unit is informed of the incoming call from the cellular phone.

17. The hands-free device according to Claim 2,
wherein the first speaker is a thin speaker that is equipped with a diaphragm made of a piezoelectric element and outputs sound by vibrating the diaphragm.

18. The hands-free device according to Claim 2, further comprising:
a microphone for the fellow passenger that captures the fellow passenger's voice and outputs a voice signal; and
a speaker for the fellow passenger that outputs sound only to the fellow passenger,
wherein the control unit further communicates with a fellow passenger's cellular phone, transmits the voice signal to the fellow passenger's cellular phone, and at the same time, have the fellow passenger's speaker output telephone conversation voice of the other party of telephone conversation of the fellow passenger based on a signal received from the fellow passenger's cellular phone.

19. The hands-free device according to Claim 1,
wherein the first voice signal outputting device is a display unit operable to display a letter on a display surface aimed at the driver in response to an inputted signal, and the second voice signal outputting device is a speaker to output sound widely in the car.

20. The hands-free device according to Claim 19, further comprising:
a microphone that captures a voice of the driver and outputs a voice signal indicating the voice,
wherein the control unit transmits the voice signal to the cellular phone when the control unit receives the voice signal from the microphone and, at the same time, erases past letters indicating contents of telephone conversation voice of the other party of the telephone conversation displayed on the display unit.

21. The hands-free device according to Claim 19,
wherein the detection unit outputs the detection signal in response to the sitting pressure of the fellow passenger.

22. The hands-free device according to Claim 19,
wherein the control unit communicates with the cellular phone through a wireless communication medium.

23. A method for outputting telephone conversation contents in a hands-free system for a driver to make a hands-free telephone conversation using a cellular phone in a car,
wherein the hands-free system comprises:
a cellular phone of a driver of a car;
a first voice signal outputting device (11e) to output a voice signal to the driver;
a second voice signal outputting device (11a to 11d) to output sound widely in the car;
a detection unit (13) operable to output a detection signal indicating whether there is a fellow passenger or not; and
a control unit (10, 14, 17) operable to communicate with the cellular phone, and operable to judge whether there is a fellow passenger or not based on the detection signal outputted from the detection unit (13),
the method is executed in the control unit and includes:
a reception step for receiving a telephone conversation voice signal indicating telephone conversation voice from other party of the telephone conversation;
a detection signal acquisition step for acquiring the detection signal;
a judgment step for judging whether there is a fellow passenger in the car or not based on the detection signal acquired by the detection signal acquisition step;
a first voice output step for outputting the telephone conversation voice from the second voice signal outputting device (11a to 11d) when it is judged in the judgment step that there is no fellow passenger; and
a second voice output step for outputting the telephone conversation voice from the first voice signal outputting device (11e) when it is judged in the judgment step that there is the fellow passenger.

24. The output method of the telephone conversation contents according to Claim 23,
wherein the first voice signal outputting device is a first speaker to output sound to the driver, and the second voice signal outputting device is a second speaker to output sound widely in the car.

25. The output method of the telephone conversation contents according to Claim 23,
wherein in the first voice step, the telephone conversation voice is prohibited from being outputted from the first speaker and is outputted from the second speaker, and
in the second voice output step, the telephone conversation voice is prohibited from being outputted from the second speaker and is outputted from the first speaker.

26. The output method of the telephone conversation contents according to Claim 23,
wherein in the first voice output step, the telephone conversation voice from the first and second speakers is outputted in the condition that the sound volume of the second speaker is larger than the sound volume of the first speaker and
in the second voice output step, the telephone conversation voice from the first and second speakers is outputted in the condition that the sound volume of the first speaker is larger than the sound volume of the second speaker.

27. The output method of telephone conversation contents according to Claim 23,
wherein the control unit further includes:
an audio signal detection step for detecting that an audio signal indicating the audio sound including at least one of music, radio sound, and TV sound is outputted in the car in the case that telephone conversation voice signal are not received from the cellular phone, and
a first audio sound output step for outputting the audio sound from the second speaker based on the audio signal.

28. The output method of the telephone conversation contents according to Claim 27,
wherein the hands-free system comprises the plural second speakers, and
the control unit further includes:
a second audio sound output step for prohibiting the second speaker that is nearest to the driver's seat among the plural second speakers from outputting the audio sound and outputting audio sound from the other second speaker when the control unit detects that the audio signal is outputted at the reception step.

29. The output method of the telephone conversation contents according to Claim 23,
wherein the first voice signal outputting device is a display unit operable to display letters in response to inputted signals on a display surface aimed at a driver, and the second voice signal outputting device is a second speaker to output sound widely in the car,
wherein said second voice output step is a letter output step for outputting the telephone conversation voice to the display unit and having the display unit display the contents of the telephone conversation in letters when it is judged in the judgment step that there is the fellow passenger.

30. The output method of the telephone conversation contents according to Claim 29,
wherein the hands-free system further comprises:
a microphone that captures a voice of the driver and outputs a voice signal indicating the voice, and
the control unit further includes:
a voice signal reception step for receiving the voice signal from the microphone;
a voice signal transmission step for transmitting the voice signal received by the voice signal reception step to the cellular phone;
an erasure step for erasing past letters indicating contents of telephone conversation voice of the other party of the telephone conversation displayed on the display unit.

31. A computer program product comprising a program and adapted to perform all the steps of claim 23 when said program is run on a data-processing system.

32. A computer program product comprising a program and adapted to perform all the steps of claim 24 when said program is run on a data-processing system.

33. A computer program product comprising a program and adapted to perform all the steps of claim 25 when said program is run on a data-processing system.

34. A computer program product comprising a program and adapted to perform all the steps of claim 26 when said program is run on a data-processing system.

35. A computer program product comprising a program and adapted to perform all the steps of claim 27 when said program is run on a data-processing system.

36. A computer program product comprising a program and adapted to perform all the steps of claim 28 when said program is run on a data-processing system.

37. A computer program product comprising a program and adapted to perform all the steps of claim 29 when said program is run on a data-processing system.

38. A computer program product comprising a program and adapted to perform all the steps of claim 30 when said program is run on a data-processing system.

## Patentansprüche

1. Freisprechvorrichtung für einen Fahrer zum Führen eines Freisprech-Telefongesprächs unter Verwendung eines Mobiltelefons in einem Kraftfahrzeug, die Folgendes aufweist:
eine erste Stimmesignal-Ausgabevorrichtung (11e) zum Ausgeben eines Stimmesignals an den Fahrer;
eine zweite Stimmesignal-Ausgabevorrichtung (11a bis 11d) zum Ausgeben von Ton überall in dem Kraftfahrzeug;
eine Erkennungseinheit (13), die so betreibbar ist, dass sie ein Erkennungssignal ausgibt, das anzeigt, ob es einen Mitfahrer gibt oder nicht; und
eine Steuereinheit (10, 14, 17), die so betreibbar ist, dass sie mit dem Mobiltelefon kommuniziert, und die so betreibbar ist, dass sie aufgrund des von der Erkennungseinheit (13) ausgegebenen Erkennungssignals entscheidet, ob es einen Mitfahrer gibt oder nicht,
wobei die Steuereinheit (10, 17) so betreibbar ist, dass sie, wenn sie ein Telefongespräch-Stimmesignal empfängt, das die Telefongesprächsstimme des anderen Teilnehmers des Telefongesprächs anzeigt, die Telefongesprächsstimme von der zweiten Stimmesignal-Ausgabevorrichtung (11a bis 11d) ausgibt, wenn die Steuereinheit entscheidet, dass es keinen Mitfahrer gibt, und die Telefongesprächsstimme von der ersten Stimmesignal-Ausgabevorrichtung (11e) ausgibt, wenn die Steuereinheit entscheidet, dass es einen Mitfahrer gibt.

2. Freisprechvorrichtung nach Anspruch 1, **dadurch gekennzeichnet, dass** die erste Stimmesignal-Ausgabevorrichtung ein erster Lautsprecher zum Ausgeben von Ton an den Fahrer ist und die zweite Stimmesignal-Ausgabevorrichtung ein zweiter Lautsprecher zum Ausgeben von Ton überall in dem Kraftfahrzeug ist.

3. Freisprechvorrichtung nach Anspruch 2, **dadurch gekennzeichnet, dass**
die Steuereinheit so betreibbar ist, dass sie verhindert, dass die Telefongesprächsstimme von dem ersten Lautsprecher ausgegeben wird, und sie die Telefongesprächsstimme stattdessen von dem zweiten Lautsprecher ausgeben lässt, wenn die Steuereinheit entscheidet, dass es keinen Mitfahrer gibt, und
die Steuereinheit so betreibbar ist, dass sie verhindert, dass die Telefongesprächsstimme von dem zweien Lautsprecher ausgegeben wird, und sie die Telefongesprächsstimme stattdessen von dem ersten Lautsprecher ausgeben lässt, wenn die Steuereinheit entscheidet, dass es einen Mitfahrer gibt.

4. Freisprechvorrichtung nach Anspruch 2, **dadurch gekennzeichnet, dass**
die Steuereinheit die Telefongesprächsstimme unter der Bedingung von dem ersten und dem zweiten Lautsprecher ausgeben lässt, dass die von dem zweiten Lautsprecher ausgegebene Lautstärke größer als die von dem ersten Lautsprecher ausgegebene Lautstärke ist, wenn die Steuereinheit entscheidet, dass es keinen Mitfahrer gibt, und
die Steuereinheit die Telefongesprächsstimme unter der Bedingung von dem ersten und dem zweiten Lautsprecher ausgeben lässt, dass die von dem ersten Lautsprecher ausgegebene Lautstärke größer als die von dem zweiten Lautsprecher ausgegebene Lautstärke ist, wenn die Steuereinheit entscheidet, dass es einen Mitfahrer gibt.

5. Freisprechvorrichtung nach Anspruch 2, **dadurch gekennzeichnet, dass** der erste Lautsprecher eine Richtfunktion hat, die die Ausgaberichtung des Schalls auf die Ohren eines Fahrers richtet.

6. Freisprechvorrichtung nach Anspruch 2, **dadurch gekennzeichnet, dass** der zweite Lautsprecher eine Gruppe aus mehreren Lautsprechern ist, die an mehreren Stellen in dem Kraftfahrzeug angebracht sind und keine Richtfunktion für den ausgegebenen Schall haben.

7. Freisprechvorrichtung nach Anspruch 2, **dadurch gekennzeichnet, dass** die Erkennungseinheit das Erkennungssignal in Reaktion auf einen Sitzdruck des Mitfahrers ausgibt.

8. Freisprechvorrichtung nach Anspruch 2, **dadurch gekennzeichnet, dass** die Erkennungseinheit das Erkennungssignal durch Erkennen des Vorhandenseins von Infrarotstrahlung und in Reaktion auf das Erkennungsergebnis ausgibt.

9. Freisprechvorrichtung nach Anspruch 2, **dadurch gekennzeichnet, dass** die Erkennungseinheit das Erkennungssignal durch Erfassen von Sprache in dem Kraftfahrzeug, durch Entscheiden, ob die Sprache die Sprache des Fahrers oder die Sprache einer anderen Person ist, und in Reaktion auf das Entscheidungsergebnis ausgibt.

10. Freisprechvorrichtung nach Anspruch 2, **dadurch gekennzeichnet, dass** die Erkennungseinheit das Erkennungssignal, dass es einen Mitfahrer gibt, ausgibt, wenn in dem Kraftfahrzeug mehrere Mobiltelefone vorhanden sind, indem sie die Mobiltelefone ermittelt und entscheidet, ob die Anzahl der Mobiltelefone eins oder größer ist.

11. Freisprechvorrichtung nach Anspruch 2, **dadurch gekennzeichnet, dass** die Steuereinheit außerdem ein Tonsignal von dem zweiten Lautsprecher ausgeben lässt, wenn das Tonsignal, das den Ton anzeigt, der mindestens entweder Musik, Radioton oder TV-Ton umfasst, in dem Kraftfahrzeug in dem Fall ausgegeben wird, dass die Telefongesprächs-Stimmesignale nicht von dem Mobiltelefon empfangen werden.

12. Freisprechvorrichtung nach Anspruch 11, die weiterhin einen dritten Lautsprecher aufweist, der eine Richtfunktion für den ausgegebenen Ton hat und an einem Sitz angebracht ist, in dem der Mitfahrer sitzt, wobei die Ausgaberichtung des Tons des dritten Lautsprechers auf die Ohren des Mitfahrers gerichtet ist,
**dadurch gekennzeichnet, dass** die Steuereinheit das Tonsignal von dem zweiten und dem dritten Lautsprecher ausgeben lässt, wenn das Tonsignal in dem Kraftfahrzeug in dem Fall ausgegeben wird, dass die Steuereinheit nicht das Telefongesprächssignal von dem Mobiltelefon empfängt.

13. Freisprechvorrichtung nach Anspruch 11, die mehrere zweite Lautsprecher aufweist, **dadurch gekennzeichnet, dass** die Steuereinheit verhindert, dass von den mehreren zweiten Lautsprechern derjenige zweite Lautsprecher, der dem Sitz des Fahrers am nächsten ist, das Tonsignal ausgibt, und sie stattdessen das Tonsignal von einem anderen zweiten Lautsprecher ausgeben lässt, wenn das Tonsignal in dem Kraftfahrzeug in dem Fall ausgegeben wird, dass die Steuereinheit die Telefongesprächssignale empfängt.

14. Freisprechvorrichtung nach Anspruch 2, **dadurch gekennzeichnet, dass** die Steuereinheit über ein Funkverkehrsmedium mit dem Mobiltelefon kommuniziert.

15. Freisprechvorrichtung nach Anspruch 2, **dadurch gekennzeichnet, dass** der erste Lautsprecher eine Tonausgabe-Kennlinie hat, die bei einer Frequenz von 300 Hz bis 3,4 kHz fast flach ist.

16. Freisprechvorrichtung nach Anspruch 2, **dadurch gekennzeichnet, dass** die Steuereinheit den zweiten Lautsprecher einen ankommender-Ruf-Ton ausgeben lässt, der einen ankommenden Ruf anzeigt, wenn der Steuereinheit der ankommende Ruf von dem Mobiltelefon mitgeteilt wird.

17. Freisprechvorrichtung nach Anspruch 2, **dadurch gekennzeichnet, dass** der erste Lautsprecher ein dünner Lautsprecher ist, der mit einer Membran versehen ist, die aus einem piezoelektrischen Element besteht, und der einen Ton **dadurch** ausgibt, dass er die Membran in Schwingungen versetzt.

18. Freisprechvorrichtung nach Anspruch 2, die weiterhin
ein Mikrofon für den Mitfahrer, das die Sprache des Mitfahrers erfasst und ein Stimmesignal ausgibt; und
einen Lautsprecher für den Mitfahrer, der Ton nur an den Mitfahrer ausgibt,
aufweist,
**dadurch gekennzeichnet, dass** die Steuereinheit außerdem mit einem Mobiltelefon des Mitfahrers kommuniziert, das Stimmesignal zu dem Mobiltelefon des Mitfahrers sendet und gleichzeitig aufgrund eines von dem Mobiltelefon des Mitfahrers empfangenen Signals den Lautsprecher des Mitfahrers die Telefongesprächsstimme des Teilnehmers des Telefongesprächs des Mitfahrers ausgeben lässt.

19. Freisprechvorrichtung nach Anspruch 1, **dadurch gekennzeichnet, dass** die erste Stimmesignal-Ausgabevorrichtung eine Anzeige-Einheit ist, die so betreibbar ist, dass sie in Reaktion auf ein eingegebenes Signal einen Text auf einer auf den Fahrer gerichteten Anzeigefläche anzeigt, und die zweite Stimmesignal-Ausgabevorrichtung ein Lautsprecher zum Ausgeben von Ton überall in dem Kraftfahrzeug ist.

20. Freisprechvorrichtung nach Anspruch 19, die weiterhin ein Mikrofon aufweist, das die Sprache des Fahrers erfasst und ein die Sprache anzeigendes Stimmesignal ausgibt,
**dadurch gekennzeichnet, dass** die Steuereinheit das Stimmesignal zu dem Mobiltelefon sendet, wenn die Steuereinheit das Stimmesignal von dem Mikrofon empfängt, und dass sie gleichzeitig an der Anzeige-Einheit angezeigte frühere Texte löscht, die den Inhalt des Telefongesprächs des Teilnehmers des Telefongesprächs angeben.

21. Freisprechvorrichtung nach Anspruch 19, **dadurch gekennzeichnet, dass** die Erkennungseinheit das Erkennungssignal in Reaktion auf den Sitzdruck des Mitfahrers ausgibt.

22. Freisprechvorrichtung nach Anspruch 19, **dadurch gekennzeichnet, dass** die Steuereinheit über ein Funkverkehrsmedium mit dem Mobiltelefon kommuniziert.

23. Verfahren zum Ausgeben eines Telefongesprächsinhalts in einem Freisprechsystem für einen Fahrer zum Führen eines Freisprech-Telefongesprächs unter Verwendung eines Mobiltelefons in einem Kraftfahrzeug, wobei das Freisprechsystem Folgendes aufweist:
ein Mobiltelefon eines Fahrers eines Kraftfahrzeugs;
eine erste Stimmesignal-Ausgabevorrichtung (11e) zum Ausgeben eines Stimmesignals an den Fahrer;
eine zweite Stimmesignal-Ausgabevorrichtung (11a bis 11d) zum Ausgeben von Ton überall in dem Kraftfahrzeug;
eine Erkennungseinheit (13), die so betreibbar ist, dass sie ein Erkennungssignal ausgibt, das anzeigt, ob es einen Mitfahrer gibt oder nicht; und
eine Steuereinheit (10, 14, 17), die so betreibbar ist, dass sie mit dem Mobiltelefon kommuniziert, und die so betreibbar ist, dass sie aufgrund des von der Erkennungseinheit (13) ausgegebenen Erkennungssignals entscheidet, ob es einen Mitfahrer gibt oder nicht,
wobei das Verfahren in der Steuereinheit durchgeführt wird und Folgendes umfasst:
einen Empfangsschritt zum Empfangen eines Telefongespräch-Stimmesignals, das die Telefongesprächsstimme von dem anderen Teilnehmer des Telefongesprächs anzeigt;
einen Erkennungssignal-Erfassungsschritt zum Erfassen des Erkennungssignals;
einen Entscheidungsschritt zum Entscheiden aufgrund des in dem Erkennungssignal-Erfassungsschritt erfassten Erkennungssignals, ob es einen Mitfahrer gibt oder nicht;
einen ersten Sprachausgabeschritt zum Ausgeben der Telefongesprächsstimme von der zweiten Stimmesignal-Ausgabevorrichtung (11a bis 11d), wenn in dem Entscheidungsschritt entschieden wird, dass es keinen Mitfahrer gibt; und
einen zweiten Sprachausgabeschritt zum Ausgeben der Telefongesprächsstimme von der ersten Stimmesignal-Ausgabevorrichtung (11e), wenn in dem Entscheidungsschritt entschieden wird, dass es einen Mitfahrer gibt.

24. Verfahren zum Ausgeben eines Telefongesprächsinhalts nach Anspruch 23, **dadurch gekennzeichnet, dass** die erste Stimmesignal-Ausgabevorrichtung ein erster Lautsprecher zum Ausgeben von Ton an den Fahrer ist und die zweite Stimmesignal-Ausgabevorrichtung ein zweiter Lautsprecher zum Ausgeben von Ton überall in dem Kraftfahrzeug ist.

25. Verfahren zum Ausgeben eines Telefongesprächsinhalts nach Anspruch 23, **dadurch gekennzeichnet, dass**
in dem ersten Sprachausgabeschritt verhindert wird, dass die Telefongesprächsstimme von dem ersten Lautsprecher ausgegeben wird, und sie stattdessen von dem zweiten Lautsprecher ausgegeben wird, und
in dem zweiten Sprachausgabeschritt verhindert wird, dass die Telefongesprächsstimme von dem zweiten Lautsprecher ausgegeben wird, und sie stattdessen von dem ersten Lautsprecher ausgegeben wird.

26. Verfahren zum Ausgeben eines Telefongesprächsinhalts nach Anspruch 23, **dadurch gekennzeichnet, dass**
in dem ersten Sprachausgabeschritt die Telefongesprächsstimme unter der Bedingung von dem ersten und dem zweiten Lautsprecher ausgegeben wird, dass die Lautstärke des zweiten Lautsprechers größer als die Lautstärke des ersten Lautsprechers ist, und
in dem zweiten Sprachausgabeschritt die Telefongesprächsstimme unter der Bedingung von dem ersten und dem zweiten Lautsprecher ausgegeben wird, dass die Lautstärke des ersten Lautsprechers größer als die Lautstärke des zweiten Lautsprechers ist.

27. Verfahren zum Ausgeben eines Telefongesprächsinhalts nach Anspruch 23, **dadurch gekennzeichnet, dass** die Steuereinheit weiterhin folgende Schritte ausführt:
einen Tonsignal-Erkennungsschritt zum Erkennen, dass ein Tonsignal, das den Ton anzeigt, der mindestens entweder Musik, Radioton oder TV-Ton umfasst, in dem Kraftfahrzeug in dem Fall ausgegeben wird, dass die Telefongesprächs-Stimmesignale nicht von dem Mobiltelefon empfangen werden, und
einen ersten Tonausgabeschritt zum Ausgeben des Tons von dem zweiten Lautsprecher aufgrund des Tonsignals.

28. Verfahren zum Ausgeben eines Telefongesprächsinhalts nach Anspruch 27, **dadurch gekennzeichnet, dass**
das Freisprechsystem mehrere zweite Lautsprecher aufweist und
die Steuereinheit weiterhin Folgendes ausführt: einen zweiten Tonausgabeschritt zum Verhindern, dass von den mehreren zweiten Lautsprechern derjenige zweite Lautsprecher, der dem Sitz des Fahrers am nächsten ist, den Ton ausgibt, und zum Ausgeben des Tons von einem anderen zweiten Lautsprecher, wenn die Steuereinheit erkennt, dass das Tonsignal in dem Empfangsschritt ausgegeben wird.

29. Verfahren zum Ausgeben eines Telefongesprächsinhalts nach Anspruch 23, **dadurch gekennzeichnet, dass**
die erste Stimmesignal-Ausgabevorrichtung eine Anzeige-Einheit ist, die so betreibbar ist, dass sie in Reaktion auf eingegebene Signale Texte auf einer auf einen Fahrer gerichteten Anzeigefläche anzeigt, und die zweite Stimmesignal-Ausgabevorrichtung ein zweiter Lautsprecher zum Ausgeben von Ton überall in dem Kraftfahrzeug ist und
der zweite Sprachausgabeschritt ein Textausgabeschritt zum Ausgeben der Telefongesprächsstimme an die Anzeige-Einheit und zum Veranlassen, dass die Anzeige-Einheit den Inhalt des Telefongesprächs in Texten anzeigt, wenn in dem Entscheidungsschritt entschieden wird, dass es einen Mitfahrer gibt, ist.

30. Verfahren zum Ausgeben eines Telefongesprächsinhalts nach Anspruch 29, **dadurch gekennzeichnet, dass**
das Freisprechsystem weiterhin ein Mikrofon aufweist, das die Sprache des Fahrers erfasst und ein die Sprache anzeigendes Stimmesignal ausgibt, und
die Steuereinheit weiterhin folgende Schritte ausführt:
einen Stimmesignal-Empfangsschritt zum Empfangen des Stimmesignals von dem Mikrofon;
einen Stimmesignal-Sendeschritt zum Senden des mit dem Stimmesignal-Empfangsschritt empfangenen Stimmesignals zu dem Mobiltelefon und
einen Löschschritt zum Löschen von an der Anzeige-Einheit angezeigten früheren Texten, die den Inhalt des Telefongesprächs des Teilnehmers des Telefongesprächs angeben.

31. Computerprogrammprodukt, das ein Programm aufweist und so eingerichtet ist, dass es alle Schritte von Anspruch 23 ausführt, wenn das Programm auf einem Datenverarbeitungssystem abgearbeitet wird.

32. Computerprogrammprodukt, das ein Programm aufweist und so eingerichtet ist, dass es alle Schritte von Anspruch 24 ausführt, wenn das Programm auf einem Datenverarbeitungssystem abgearbeitet wird.

33. Computerprogrammprodukt, das ein Programm aufweist und so eingerichtet ist, dass es alle Schritte von Anspruch 25 ausführt, wenn das Programm auf einem Datenverarbeitungssystem abgearbeitet wird.

34. Computerprogrammprodukt, das ein Programm aufweist und so eingerichtet ist, dass es alle Schritte von Anspruch 26 ausführt, wenn das Programm auf einem Datenverarbeitungssystem abgearbeitet wird.

35. Computerprogrammprodukt, das ein Programm aufweist und so eingerichtet ist, dass es alle Schritte von Anspruch 27 ausführt, wenn das Programm auf einem Datenverarbeitungssystem abgearbeitet wird.

36. Computerprogrammprodukt, das ein Programm aufweist und so eingerichtet ist, dass es alle Schritte von Anspruch 28 ausführt, wenn das Programm auf einem Datenverarbeitungssystem abgearbeitet wird.

37. Computerprogrammprodukt, das ein Programm aufweist und so eingerichtet ist, dass es alle Schritte von Anspruch 29 ausführt, wenn das Programm auf einem Datenverarbeitungssystem abgearbeitet wird.

38. Computerprogrammprodukt, das ein Programm aufweist und so eingerichtet ist, dass es alle Schritte von Anspruch 30 ausführt, wenn das Programm auf einem Datenverarbeitungssystem abgearbeitet wird.

## Revendications

1. Dispositif mains libres destiné à permettre à un conducteur d'effectuer une conversation téléphonique mains libres en utilisant un téléphone cellulaire dans une voiture, comprenant :
un premier dispositif de sortie de signal vocal (11e) destiné à fournir en sortie un signal vocal au conducteur,
un second dispositif de sortie de signal vocal (11a à 11d) destiné à fournir en sortie un son dans toute la voiture,
une unité de détection (13) pouvant être mise en oeuvre pour fournir en sortie un signal de détection indiquant s'il y a un passager ou non, et
une unité de commande (10, 14, 17) pouvant être mise en oeuvre pour communiquer avec le téléphone cellulaire et pouvant être mise en oeuvre pour évaluer s'il y a un passager ou non sur la base du signal de détection fourni en sortie de l'unité de détection (13),
à la réception d'un signal vocal de conversation téléphonique représentant la voix de la conversation téléphonique du correspondant de la conversation téléphonique, ladite unité de commande (10, 17) peut être mise en oeuvre pour fournir en sortie la voix de la conversation téléphonique depuis le second dispositif de sortie de signal vocal (11a à 11d) lorsque l'unité de commande estime qu'il n'y a pas de passager, et peut être mise en oeuvre pour fournir en sortie la voix de la conversation téléphonique depuis le premier dispositif de sortie de signal vocal (11e) lorsque l'unité de commande estime qu'il y a un passager.

2. Dispositif mains libres selon la revendication 1,
dans lequel le premier dispositif de sortie de signal vocal est un premier haut-parleur destiné à fournir en sortie un son au conducteur, et le second dispositif de sortie de signal vocal est un second haut-parleur destiné à fournir en sortie un son dans toute la voiture.

3. Dispositif mains libres selon la revendication 2,
dans lequel l'unité de commande peut être mise en oeuvre pour empêcher que la voix de la conversation téléphonique soit fournie en sortie du premier haut-parleur et peut être mise en oeuvre pour fournir en sortie la voix de la conversation téléphonique depuis le second haut-parleur lorsque l'unité de commande estime qu'il n'y a pas de passager, et
peut être mise en oeuvre pour empêcher que la voix de la conversation téléphonique soit fournie en sortie du second haut-parleur et peut être mise en oeuvre pour fournir en sortie la voie de la conversation téléphonique depuis le premier haut-parleur lorsque l'unité de commande estime qu'il y a un passager.

4. Dispositif mains libres selon la revendication 2,
dans lequel l'unité de commande fait en sorte que la voix de la conversation téléphonique soit fournie en sortie des premier et second haut-parleurs dans des conditions telles que le volume sonore fourni en sortie par le second haut-parleur est plus important que le volume sonore fourni en sortie par le premier haut-parleur, lorsque l'unité de commande estime qu'il n'y a pas de passager, et
fait en sorte que la voix de la conversation téléphonique soit fournie en sortie des premier et second haut-parleurs dans des conditions telles que le volume sonore fourni en sortie par le premier haut-parleur est plus important que le volume sonore fourni en sortie par le second haut-parleur, lorsque l'unité de commande estime qu'il y a un passager.

5. Dispositif mains libres selon la revendication 2,
dans lequel le premier haut-parleur présente des caractéristiques de directivité telles que la direction de sortie du son pointe sur les oreilles d'un conducteur.

6. Dispositif mains libres selon la revendication 2,
dans lequel le second haut-parleur est un groupe de plusieurs haut-parleurs qui sont installés à plusieurs emplacements dans la voiture et qui ne présentent pas de caractéristiques de directivité du son fourni en sortie.

7. Dispositif mains libres selon la revendication 2,
dans lequel l'unité de détection fournit en sortie le signal de détection en réponse à une pression d'installation du passager.

8. Dispositif mains libres selon la revendication 2,
dans lequel l'unité de détection fournit en sortie le signal de détection en détectant la présence d'un rayonnement infrarouge et en réponse au résultat de la détection.

9. Dispositif mains libres selon la revendication 2,
dans lequel l'unité de détection fournit en sortie le signal de détection en réalisant une acquisition vocale dans la voiture, en évaluant si la voix est la voix du conducteur ou la voix d'une autre personne, et en réponse au résultat de l'évaluation.

10. Dispositif mains libres selon la revendication 2,
dans lequel l'unité de détection fournit en sortie le signal de détection indiquant qu'il y a un passager lorsque le nombre des téléphones cellulaires emportés dans la voiture est multiple, en détectant les téléphones cellulaires et en évaluant si le nombre des téléphones cellulaires est de un ou plus.

11. Dispositif mains libres selon la revendication 2,
dans lequel l'unité de commande fait en outre en sorte que le son audio soit fourni en sortie du second haut-parleur lorsqu'un signal audio représentant le son audio, comprenant au moins l'un d'une musique, d'un son de radio et d'un son de récepteur de télévision, est fourni en sortie dans la voiture dans le cas où les signaux vocaux de conversation téléphonique ne sont pas reçus depuis le téléphone cellulaire.

12. Dispositif mains libres selon la revendication 11, comprenant en outre :
un troisième haut-parleur qui présente des caractéristiques de directivité du son fourni en sortie, et qui est installé sur un siège sur lequel le passager s'assoie, la direction de sortie du son du troisième haut-parleur pointant sur les oreilles du passager,
dans lequel l'unité de commande fait en sorte que le son audio fourni en sortie des second et troisième haut-parleurs lorsque le signal audio est fourni en sortie dans la voiture dans le cas où l'unité de commande ne reçoit pas le signal de conversation téléphonique depuis le téléphone cellulaire.

13. Dispositif mains libres selon la revendication 11, comprenant les plusieurs seconds haut-parleurs,
dans lequel l'unité de commande empêche le second haut-parleur qui est le plus proche du siège du conducteur parmi les plusieurs seconds haut-parleurs, de fournir en sortie le son audio et fournit en sortie le son audio depuis un autre second haut-parleur lorsque le signal audio est fourni en sortie dans la voiture dans le cas où l'unité de commande reçoit les signaux vocaux de conversation téléphonique.

14. Dispositif mains libres selon la revendication 2,
dans lequel l'unité de commande communique avec le téléphone cellulaire par l'intermédiaire d'un support de communication sans fil.

15. Dispositif mains libres selon la revendication 2,
dans lequel le premier haut-parleur présente une caractéristique de sortie du son qui est pratiquement plate à une fréquence de 300 Hz à 3,4 kHz.

16. Dispositif mains libres selon la revendication 2, dans lequel l'unité de commande fait en sorte que le second haut-parleur fournisse en sortie un son d'appel entrant qui annonce un appel entrant lorsque l'unité de commande est informée de l'appel entrant depuis le téléphone cellulaire.

17. Dispositif mains libres selon la revendication 2,
dans lequel le premier haut-parleur est un haut-parleur mince qui est équipé d'une membrane faite d'un élément piézoélectrique et fournit en sortie un son en faisant vibrer la membrane.

18. Dispositif mains libres selon la revendication 2, comprenant en outre :
un microphone destiné au passager qui réalise une acquisition de la voix du passager et fournit un signal vocal, et
un haut-parleur destiné au passager qui fournit en sortie un son uniquement pour le passager,
dans lequel l'unité de commande communique en outre avec un téléphone cellulaire du passager, transmet le signal vocal au téléphone cellulaire du passager, et en même temps, fait en sorte que le haut-parleur du passager fournisse en sortie la voix de la conversation téléphonique du correspondant de la conversation téléphonique du passager sur la base d'un signal reçu depuis le téléphone cellulaire du passager.

19. Dispositif mains libres selon la revendication 1,
dans lequel le premier dispositif de sortie de signal vocal est une unité d'affichage pouvant être mise en oeuvre pour afficher une inscription sur une surface d'affichage orientée vers le conducteur en réponse à un signal appliqué en entrée, et le second dispositif de sortie de signal vocal est un haut-parleur destiné à fournir en sortie un son dans toute la voiture.

20. Dispositif mains libres selon la revendication 19, comprenant en outre :
un microphone qui réalise l'acquisition de la voix du conducteur et fournit en sortie un signal vocal représentant la voix,
dans lequel l'unité de commande transmet le signal vocal au téléphone cellulaire lorsque l'unité de commande reçoit le signal vocal depuis le microphone et efface en même temps des inscriptions antérieures représentant un contenu de voix de conversation téléphonique du correspondant de la conversation téléphonique affichée sur l'unité d'affichage.

21. Dispositif mains libres selon la revendication 19,
dans lequel l'unité de détection fournit en sortie le signal de détection en réponse à la pression d'installation du passager.

22. Dispositif mains libres selon la revendication 19,
dans lequel l'unité de commande communique avec le téléphone cellulaire par l'intermédiaire d'un support de communication sans fil.

23. Procédé destiné à fournir en sortie un contenu de conversation téléphonique dans un système mains libres pour permettre à un conducteur d'effectuer une conversation téléphonique mains libres en utilisant un téléphone cellulaire dans une voiture,
dans lequel le système mains libres comprend :
un téléphone cellulaire d'un conducteur d'un véhicule,
un premier dispositif de sortie de signal vocal (11e) destiné à fournir en sortie un signal vocal au conducteur,
un second dispositif de sortie de signal vocal (11a à 11d) destiné à fournir en sortie un son dans toute la voiture,
une unité de détection (13) pouvant être mise en oeuvre pour fournir en sortie un signal de détection indiquant s'il y a un passager ou non, et
une unité de commande (10, 14, 17) pouvant être mise en oeuvre pour communiquer avec le téléphone cellulaire, et pouvant être mise en oeuvre pour évaluer s'il y a un passager ou non sur la base du signal de détection fourni en sortie de l'unité de détection (13),
le procédé est exécuté dans l'unité de commande et comprend :
une étape de réception destinée à recevoir un signal vocal de conversation téléphonique représentant une voix de conversation téléphonique d'un correspondant de la conversation téléphonique,
une étape d'acquisition de signal de détection destinée à acquérir le signal de détection,
une étape d'évaluation destinée à évaluer s'il y a ou non un passager dans la voiture sur la base du signal de détection acquis par le biais de l'étape d'acquisition de signal de détection,
une première étape de sortie vocale destinée à fournir en sortie la voix de la conversation téléphonique à partir du second dispositif de sortie de signal vocal (11a à 11d) lorsqu'il est évalué dans l'étape d'évaluation qu'il n'y a pas de passager, et
une seconde étape de sortie vocale destinée à fournir en sortie la voix de la conversation téléphonique à partir du premier dispositif de sortie de signal vocal (11e) lorsqu'il est évalué dans l'étape d'évaluation qu'il y a un passager.

24. Procédé de sortie du contenu de conversation téléphonique selon la revendication 23,
dans lequel le premier dispositif de sortie de signal vocal est un premier haut-parleur destiné à fournir en sortie un son au conducteur, et le second dispositif de sortie de signal vocal est un second haut-parleur destiné à fournir en sortie un son dans toute la voiture.

25. Procédé de sortie du contenu de conversation téléphonique selon la revendication 23,
dans lequel dans la première étape de sortie vocale, on empêche que la voix de la conversation téléphonique soit fournie en sortie depuis le premier haut-parleur et elle est fournie en sortie du second haut-parleur, et
dans la seconde étape de sortie vocale, on empêche que la voix de la conversation téléphonique soit fournie en sortie du second haut-parleur et elle est fournie en sortie du premier haut-parleur.

26. Procédé de sortie du contenu de conversation téléphonique selon la revendication 23,
dans lequel dans la première étape de sortie vocale, la voix de la conversation téléphonique provenant des premier et second haut-parleurs est fournie en sortie dans des conditions telles que le volume sonore du second haut-parleur est plus important que le volume sonore du premier haut-parleur et
dans la seconde étape de sortie vocale, la voix de la conversation téléphonique provenant des premier et second haut-parleurs est fournie en sortie dans des conditions telles que le volume sonore du premier haut-parleur est plus important que le volume sonore du second haut-parleur.

27. Procédé de sortie du contenu de conversation téléphonique selon la revendication 23,
dans lequel l'unité de commande comprend en outre :
une étape de détection de signal audio destinée à détecter le fait qu'un signal audio représentant le son audio, comprenant au moins l'un d'une musique, d'un son de radio et d'un son de récepteur de télévision, est fourni en sortie dans la voiture dans le cas où des signaux vocaux de conversation téléphonique ne sont pas reçus depuis le téléphone cellulaire, et
une première étape de sortie de son audio destinée à fournir en sortie le son audio depuis le second haut-parleur sur la base du signal audio.

28. Procédé de sortie du contenu de conversation téléphonique selon la revendication 27,
dans lequel le système mains libres comprend les plusieurs seconds haut-parleurs, et
l'unité de commande comprend en outre:
une seconde étape de sortie de son audio destinée à empêcher que le second haut-parleur qui est le plus proche du siège du conducteur parmi les plusieurs seconds haut-parleurs fournisse en sortie le son audio et à fournir en sortie le son audio depuis l'autre second haut-parleur, lorsque l'unité de commande détecte que le signal audio est fourni en sortie à l'étape de réception.

29. Procédé de sortie du contenu de conversation téléphonique selon la revendication 23,
dans lequel le premier dispositif de sortie de signal vocal est une unité d'affichage pouvant être mise en oeuvre pour afficher des inscriptions en réponse à des signaux appliqués en entrée sur une surface d'affichage orientée vers un conducteur, et le second dispositif de sortie de signal vocal est un second haut-parleur destiné à fournir en sortie un son dans toute la voiture,
dans lequel ladite seconde étape de sortie vocale est une étape de sortie d'inscriptions destinée à fournir en sortie la voix de la conversation téléphonique sur l'unité d'affichage et à faire en sorte que l'unité d'affichage affiche le contenu de la conversation téléphonique sous forme d'inscriptions lorsqu'il est évalué dans l'étape d'évaluation qu'il y a un passager.

30. Procédé de sortie du contenu de conversation téléphonique selon la revendication 29,
dans lequel le système mains libres comprend en outre :
un microphone qui réalise l'acquisition de la voix du conducteur et fournit en sortie un signal vocal représentant la voix, et
l'unité de commande comprend en outre :
une étape de réception de signal vocal destinée à recevoir le signal vocal depuis le microphone,
une étape de transmission de signal vocal destinée à transmettre le signal vocal reçu par le biais de l'étape de réception de signal vocal au téléphone cellulaire,
une étape d'effacement destinée à effacer les inscriptions antérieures représentant un contenu de voix de conversation téléphonique du correspondant de la conversation téléphonique affichée sur l'unité d'affichage.

31. Produit de programme informatique comprenant un programme et conçu pour exécuter toutes les étapes de la revendication 23 lorsque ledit programme est exécuté sur un système de traitement de données.

32. Produit de programme informatique comprenant un programme et conçu pour exécuter toutes les étapes de la revendication 24 lorsque ledit programme est exécuté sur un système de traitement de données.

33. Produit de programme informatique comprenant un programme et conçu pour exécuter toutes les étapes de la revendication 25 lorsque ledit programme est exécuté sur un système de traitement de données.

34. Produit de programme informatique comprenant un programme et conçu pour exécuter toutes les étapes de la revendication 26 lorsque ledit programme est exécuté sur un système de traitement de données.

35. Produit de programme informatique comprenant un programme et conçu pour exécuter toutes les étapes de la revendication 27 lorsque ledit programme est exécuté sur un système de traitement de données.

36. Produit de programme informatique comprenant un programme et conçu pour exécuter toutes les étapes de la revendication 28 lorsque ledit programme est exécuté sur un système de traitement de données.

37. Produit de programme informatique comprenant un programme et conçu pour exécuter toutes les étapes de la revendication 29 lorsque ledit programme est exécuté sur un système de traitement de données.

38. Produit de programme informatique comprenant un programme et conçu pour exécuter toutes les étapes de la revendication 30 lorsque ledit programme est exécuté sur un système de traitement de données.
